# EUROPÄISCHE PATENTSCHRIFT

(11) **EP 3 771 622 B1**
(45) Veröffentlichungstag und Bekanntmachung des Hinweises auf die Patenterteilung: **11.09.2024**
(21) Anmeldenummer: 20188038.2
(22) Anmeldetag: 28.07.2020
(51) Int. Cl.: F16B 11/00, B62D 33/04, F16B 5/06

(54) **VERFAHREN ZUM HERSTELLEN EINES VERBUNDPROFILS, PROFILSYSTEM UND VERBUNDBAUTEIL**
METHOD FOR PRODUCING A COMPOSITE PROFILE, PROFILE SYSTEM AND COMPOSITE PROFILE
PROCÉDÉ DE FABRICATION D'UN PROFILÉ COMPOSITE, SYSTÈME DE PROFILÉ ET COMPOSANT COMPOSITE

(30) Priorität: 30.07.2019 DE 102019120549
(43) Veröffentlichungstag der Anmeldung: 03.02.2021
(73) Patentinhaber: CliXBond GmbH, 48683 Ahaus-Ottenstein (DE)
(72) Erfinder: Räckers, Claus, 48683 Ahaus-Ottenstein (DE); Räckers, Eva-Maria, 48683 Ahaus-Ottenstein (DE); Istrate, Adrian, 48683 Ahaus-Ottenstein (DE)
(74) Vertreter: Schulze Horn, Kathrin

(56) Entgegenhaltungen:
- WO-A1-02/18801
- WO-A1-2015/060780
- DE-A1- 3 644 547
- DE-A1- 3 736 211

## Beschreibung

Die vorliegende Erfindung betrifft ein Verfahren zum Herstellen eines Verbundprofils, wobei zwei oder mehr Teilprofile mittels Verklebens an aneinander anliegenden Flächen der Teilprofile miteinander zu dem Verbundprofil verbunden werden. Weiter betrifft die Erfindung ein Profilsystem zum Herstellen eines Verbundprofils sowie ein Verbundbauteil.

Das Dokument DE 20 2008 011 211 U1 beschreibt eine Ecksäule eines Lastkraftwagen-Aufbaus, wobei zur Ausbildung eines im Wesentlichen geschlossenen Laderaums eines Lastkraftwagens an den Eckpunkten eines üblicherweise rechteckigen Laderaumbodens jeweils Ecksäulen angeordnet sind, die eine feste Verbindung zwischen diesem Laderaumboden und einem Dach oder Dachaufbau des Laderaums bilden. Beispielsweise an den beiden rückwärtigen Ecksäulen können eine oder mehrere vertikal oder horizontal verschwenkbare Heckklappen angeschlagen sein, um einen Zugang von hinten in den Laderaum zu ermöglichen. Somit müssen die üblicherweise vier Ecksäulen zumindest ein Dach, häufig auch weitere Anbauteile, tragen und haltern. Besonders während des Fahrtbetriebs treten dabei erhebliche dynamische Kräfte auf, so dass eine solche Ecksäule möglichst stabil ausgelegt sein muss, dennoch aber einen kompakten Aufbau aufweisen sollte, um nicht unnötigen Laderaum zu verbrauchen. Bei einer Ecksäule der hier beschriebenen Art wird als Lösung vorgeschlagen, dass die Ecksäule aus zwei oder mehr Profilen besteht, die miteinander verbunden sind. Zur Verbindung von zwei oder mehr Profilen miteinander wird vorgeschlagen, dass zwei Profile miteinander auf einer ausreichend dimensionierten Fläche mit geeigneten Klebstoffen miteinander im Wesentlichen vollflächig verklebt werden.

Die DE 37 36 311 A1 offenbart ein System von Profilschienen und die DE 36 44 547 A1 eine Profilverbindung.

Mit dem genannten Stand der Technik lassen sich zwar stabile und doch leichte Ecksäulen von Lastkraftwagen-Aufbauten schaffen, jedoch werden die Fertigungstechnik sowie die beschränkte Verwendung als nachteilig angesehen. Insbesondere ist es bei der Fertigung der bekannten Ecksäulen erforderlich, die die Ecksäule bildenden Profile bis zum Aushärten des diese verbindenden Klebstoffs mit Hilfsvorrichtung relativ zueinander zu fixieren, um maßgenaue Ecksäulen zu erhalten. Nach dem Aushärten des Klebstoffs müssen die Hilfsvorrichtungen dann auch wieder abgebaut werden, was insgesamt zu einer wenig wirtschaftlichen Herstellung führt.

Das Dokument DE 28 51 578 A1 zeigt ein wärmegedämmtes Verbundprofil für Fenster, Türen u. dgl., das aus zwei oder mehreren Profilteilen, die über eine oder mehrere mit achssenkrecht zu den Profilteilen gerichteten Luftkammern versehene isolierende Zwischenlagen miteinander verbunden sind, besteht. Die isolierenden Zwischenlagen des Verbundprofils sind aus mehreren aneinander zu reihenden Einzelstücken zusammengesetzt und an den Einzelstücken an einer oder beiden der zwischen den Profilteilen verlaufenden Längsseiten sind jeweils ein oder mehrere abstehende Stege angeformt, die in an den Profilteilen vorgesehene Nuten eingreifen. Mit diesem Verbundprofil soll eine hohe Isolierwirkung durch geschlossene Luftkammern unter Vermeidung von Konvektion erreicht werden, was die Verwendung des Verbundprofils praktisch auf Rahmen für Fenster und Türen beschränkt.

Das Dokument DE 37 36 211 A1 zeigt einen aus mindestens zwei Teilkörpern, beispielsweise aus Profilschienen, zusammengesetzten Körper, wobei die Teilkörper einen Hohlraum umschließen, mit einer ein Auseinanderklappen der Teilkörper verhindernden Verbindung, und mit einem den Hohlkörper zumindest teilweise ausfüllenden Füllkörper, der aus elastischem Material besteht. Das Verbinden der Teilkörper erfolgt über Nuten und Federn und es ist zudem immer eine Quelle für eine Rückstellkraft erforderlich, die durch den in einem der Teilkörper angeordneten elastischen Füllkörper erzeugt wird. Zwei parallele Schenkel des zwischen diesen den Füllkörper aufweisenden Teilkörpers werden zum Verbinden, insbesondere Verrasten, mit dem anderen Teilkörper gegen die Rückstellkraft des Füllkörpers ausgelenkt und in Eingriff mit dem zweiten Teilkörper gebracht, wonach dann die Rückstellkraft des elastischen Körpers für ein Rückstellen der zuvor ausgelenkten Schenkel und somit für eine Fixierung der Teilkörper relativ zueinander sorgt. Eine Verklebung im Bereich der Nuten und Federn kann die Verbindung zusätzlich verstärken. Der hier erforderliche elastische Füllkörper führt zu einem erhöhten Fertigungs- und Montageaufwand.

Für die vorliegende Erfindung stellt sich daher die Aufgabe, ein Verfahren der eingangs genannten Art anzugeben, welches die Nachteile des Standes der Technik vermeidet und mit dem insbesondere Verbundprofile hergestellt werden können, die besonders leicht und zugleich sehr stabil ausführbar sind und dabei einfach an unterschiedlichste Verwendungszwecke anpassbar sind. Außerdem soll ein Profilsystem zum wirtschaftlichen Herstellen solcher Verbundprofile angegeben werden. Schließlich sollen vielfältig verwendbare, unter Verwendung eines oder mehrerer Verbundprofile hergestellte Verbundbauteile angegeben werden.

Die Lösung des ersten, das Verfahren betreffenden Teils der Aufgabe gelingt erfindungsgemäß mit einem Verfahren der eingangs genannten Art, das dadurch gekennzeichnet ist,
- dass jeweils zwei oder mehr Teilprofile zusätzlich mittels wenigstens zweier zusammenwirkender Steckverbindungselemente an aneinander anliegenden Flächen der Teilprofile miteinander verbunden werden,
- dass dazu wenigstens ein erstes Steckverbindungselement als aus der Fläche des einen Teilprofils herausgeformte oder als mit der Fläche des einen Teilprofils verbundene Lasche oder Zunge und wenigstens ein zweites Steckverbindungselement als in der Fläche des anderen Teilprofils angebrachte Durchbrechung hergestellt wird,
- dass die Teilprofile in einer Lage relativ zueinander aufeinandergelegt werden, in welcher die Lasche oder Zunge des einen Teilprofils in der Durchbrechung des anderen Teilprofils aufgenommen wird, und
- dass die beiden Teilprofile relativ zueinander in einer in Laschen- oder Zungenrichtung weisenden Verschieberichtung in der Ebene der aneinander anliegenden, ein- oder beidseitig mit einem Klebstoff versehenen Flächen verschoben werden und so die Lasche oder Zunge des einen Teilprofils über einen Rand der Durchbrechung des anderen Teilprofils in Halteeingriff mit dem die Durchbrechung aufweisenden Teilprofil gebracht wird und dadurch die Teilprofile für ein Aushärten des Klebstoffs gegeneinander lagegerecht fixiert werden.

Um ein unerwünschtes Lösen oder zu Maßungenauigkeiten führendes unerwünschtes Verschieben der zusammengefügten Teilprofile vor dem Aushärten oder während des Aushärtens des Klebstoffs zu vermeiden, sieht die Erfindung weiter vor, dass einzelnen oder allen Paaren von erstem und zweitem Steckverbindungselement je eine Rückschubsperre zugeordnet wird.

Dabei wird die/jede Rückschubsperre als jeweils der Lasche oder Zunge benachbarte, mit der zugehörigen Durchbrechung zusammenwirkende Sperrkieme geformt, vorzugsweise gestanzt. Die so ausgebildete Rückschubsperre behindert das Zusammenfügen der Teilprofile durch Verschieben relativ zueinander nicht, hindert aber danach die Teilprofile daran, sich in entgegengesetzter Richtung relativ zueinander zu bewegen.

Die Sperrkieme weist aus der Fläche des zweiten Teilprofils schräg nach oben in eine zu der Verschieberichtung entgegengesetzten Richtung.

Mit der Erfindung wird ein Verfahren zum Herstellen von Verbundprofilen zur Verfügung gestellt, welches vorteilhaft jegliche externen Hilfsvorrichtungen zum temporären Fixieren von das Verbundprofil bildenden, über eine Verklebung zu verbindenden Teilprofilen relativ zueinander überflüssig macht, weil erfindungsgemäß die Mittel für die relative Lagefixierung in die Teilprofile integriert sind und in diesen verbleiben können, ohne die spätere Verwendung der Verbundprofile zu behindern. Das Verbinden der Teilprofile erfolgt also mit anderen Worten über ein Stecksystem, wobei an den Teilprofilen zum einen Laschen oder Zungen und zum anderen passende Durchbrechungen angeordnet sind, über welche mittels einer Relativverschiebung der Teilprofile ein gegenseitiger Halt entsteht, ohne dass die Teilprofile durch zusätzliche Vorrichtungen gehalten werden müssen. Die Laschen oder Zungen können, wenn das Material des diese aufweisenden Teilprofils die nötigen Eigenschaften, insbesondere Federeigenschaften, hat, einstückig mit dem übrigen Teilprofil ausgebildet sein. Es ist alternativ aber auch möglich, die Zungen oder Laschen aus einem anderen Material als das zugehörige übrige Teilprofil separat herzustellen und dann mit dem übrigen Teilprofil lagegerecht zu verbinden, z. B. zu verkleben oder zu vernieten oder zu verschrauben. Dies ist insbesondere dann zweckmäßig, wenn das Material, aus dem das mit Laschen oder Zungen auszustattende Teilprofil besteht, nicht die für die Funktion der Laschen oder Zungen nötigen Eigenschaften hat oder wenn das mit Laschen oder Zungen auszustattende Teilprofil eine das einstückige Herausformen der Laschen oder Zungen verhindernde Geo-metrie aufweist oder wenn sonstige Gründe vorliegen, die das einstückige Herausformen der Laschen oder Zungen aus dem betreffenden Teilprofil verhindern. Der zwischen den Teilprofilen vorher aufgebrachte Klebstoff kann somit in jedem Fall ohne extra anzubringende, separate Zusatzvorrichtungen aushärten, was die Verbundprofilherstellung vereinfacht und beschleunigt und somit wesentlich wirtschaftlicher macht und was eine hohe Maßgenauigkeit der hergestellten Verbundprofile gewährleistet.

In Ausgestaltung des Verfahrens ist vorgesehen, dass zwei oder mehr Teilprofile jeweils mittels wenigstens zweier Paare von Lasche oder Zunge und Durchbrechung miteinander verbunden werden. Für einfache Verbundprofile reicht diese relativ einfache Anordnung von Laschen oder Zungen und Durchbrechungen völlig aus.

Eine weitere Ausgestaltung des Verfahrens sieht vor, dass zum Verkleben der Teilprofile miteinander eine Klebstofflage vor dem Verbinden der Teilprofile miteinander auf wenigstens eine der im verbundenen Zustand aneinander anliegenden Flächen der Teilprofile voll- oder teilflächig aufgetragen wird. Die konkrete Art des Auftrags des Klebstoffs richtet sich insbesondere nach dessen Eigenschaften und nach der im jeweiligen Anwendungsfall erforderlichen Festigkeit der Klebeverbindung.

Damit die Steckverbindungselemente sowohl einen guten Zusammenhalt der Teilprofile bewirken als auch technisch möglichst einfach herstellbar sind, wird vorgeschlagen, dass die/jede Lasche oder Zunge als Federklammer geformt, vorzugsweise gestanzt, wird. Dabei kann die/jede Lasche oder Zunge einstückig aus dem zugehörigen Teilprofil herausgeformt oder als zunächst separates Einzelteil hergestellt und dann mit dem zugehörigen Teilprofil in einer passenden Lage verbunden werden.

In einer Ausgestaltung des Verfahrens ist vorgesehen, dass untereinander identische Teilprofile miteinander zu dem Verbundprofil verbunden werden. Auf diese Weise können Verbundprofile mit gestaffelter Profilstärke einfach hergestellt werden.

Es besteht auch die Möglichkeit, dass die Teilprofile unter Längsversatz zueinander mauersteinverbundartig zu einem quasi endlosen, auf gewünschte Längen ablängbaren Verbundprofil miteinander verbunden werden. Dies erlaubt die Herstellung von beliebig langen Verbundprofilen aus Teilprofilen begrenzter Länge. Das Verbundprofil wird dabei wenigstens zweilagig, bei Bedarf auch aus noch mehr Lagen von Teilprofilen, hergestellt.

Dabei kann zur Vermeidung von Schwachstellen im Verbundprofil mit je zwei in Längsrichtung des Verbundprofils stoßenden Teilprofilen des Verbundprofils jeweils wenigstens ein die Stoßstelle zwischen den zwei Teilprofilen überbrückendes Überbrückungs-Teilprofil verbunden werden. Die Überbrückungs-Teilprofile werden bevorzugt an Außenflächen des Verbundprofils angeordnet.

Das erfindungsgemäße Verfahren bietet auch die Möglichkeit, dass Teilprofile unterschiedlicher Länge und/oder Breite und/oder Form miteinander zu dem Verbundprofil verbunden werden. Auf diese Weise können auch komplizierter geformte, an spezielle Verwendungen angepasste Verbundprofile erzeugt werden.

In einer weiteren vorteilhaften Ausgestaltung des Verfahrens ist vorgesehen, dass ein oder mehrere kürzere und/oder schmalere zweite Teilprofile als lokale Verstärkung(en) mit einem längeren und/oder breiteren ersten Teilprofil zu dem Verbundprofil verbunden werden. Die zweiten Teilprofile werden dabei zweckmäßig gezielt dort angeordnet, wo das erzeugte Verbundprofil aufgrund seiner vorgesehenen Verwendung Verstärkungen benötigt.

Das erfindungsgemäße Verfahren erlaubt auch die Herstellung räumlicher Verbundprofile. Dazu ist vorgesehen, dass abgewinkelte Teilprofile, insbesondere in Form von Winkelprofilen und/oder U-Profilen und/oder C-Profilen und/oder Z-Profilen, ohne Kombination oder in Kombination mit einem oder mehreren flachen Teilprofilen, zu einem umfangsseitig geschlossenen Hohlprofil miteinander verbunden werden. Hierbei können verschiedene Bereiche des als Hohlprofil erzeugten Verbundprofils mit der jeweils passenden, im Verwendungsfall benötigten Materialstärke hergestellt werden.

Gemäß einer weiteren Verfahrensausgestaltung wird das Verbundprofil mit einer über seine Länge gesehen sich verändernden Profilhöhe, insbesondere mit nicht zueinander parallel verlaufenden Biegekanten wenigstens eines im Querschnitt gesehen abgewinkelten Teilprofils des Verbundprofils, hergestellt. Auf diese Weise lassen sich Verbundprofile herstellen, die über ihre Länge gesehen unterschiedliche Belastbarkeiten aufweisen, was für viele Einsatzzwecke von Profilen günstig ist.

In vielen Verwendungen von Profilen werden diese einander überkreuzend verbaut. Im Hinblick darauf schlägt das Verfahren vor, dass zum Ermöglichen einer einander kreuzenden, teilweise ineinander versenkten und/oder einander durchdringenden Anordnung je zweier Verbundprofile wenigstens eines der zwei Verbundprofile an Profilkreuzungsstellen mit einer oder mehreren Ausnehmungen versehen wird. Hiermit wird insbesondere vorteilhaft erreicht, dass die Gesamthöhe der einander kreuzenden Verbundprofile kleiner ist als die Summe der Höhen der einzelnen Verbundprofile.

Alternativ dazu besteht auch die Möglichkeit, dass an Profilkreuzungsstellen zwei Verbundprofile übereinander gelegt oder stumpf stoßend angeordnet werden und durch Übergangswinkel mit passend zu den Steckverbindungselementen an den Verbundprofilen angeordneten Steckverbindungselementen miteinander nur mechanisch oder mechanisch und durch Verkleben verbunden werden.

Für das Verfahren ist weiter bevorzugt vorgesehen, dass die Teilprofile aus Metall mit einer Materialstärke von weniger als 3 mm hergestellt werden. In dieser relativ geringen Materialstärke ist Metall, insbesondere Stahl, noch leicht bearbeitbar, insbesondere durch Abkanten oder Rollen umformbar.

Die Teilprofile können auch z. B. aus Edelstahl, Aluminium oder Verbundstoffen hergestellt werden.

Weiterhin werden bevorzugt die Teilprofile aus bandvorbeschichtetem Metall hergestellt, wobei die Bandvorbeschichtung vorzugsweise durch Verzinkung oder Tauchlackierung erfolgt. Hiermit wird schon vor dem Verbinden der Teilprofile miteinander zu dem Verbundprofil für einen guten Korrosionsschutz des Verbundprofils gesorgt. In Verbindung mit den zuvor erwähnten geringen Materialstärken von unter 3 mm der Teilprofile wird der Korrosionsschutz auch nicht durch in den Teilprofilen nach deren Bandvorbeschichtung angebrachte Durchbrechungen vermindert; eine solche Verminderung des Korrosionsschutzes an Durchbrechungen würde erst bei Materialstärken über 3 mm auftreten.

Alternativ oder zusätzlich können auch Teilprofile aus nichtmetallischem Werkstoff hergestellt werden. Aus diesen nichtmetallischen Teilprofilen können dann nichtmetallische Verbundprofile oder auch Verbundprofile, die teils aus metallischen und teils aus nichtmetallischen Teilprofilen bestehen, gebildet werden.

Bei mit Laschen oder Zungen auszustattenden Teilprofilen aus nichtmetallischem Werkstoff ist es dann zweckmäßig, daran separat gefertigte Laschen oder Zungen aus einem metallischen Werkstoff, wie Federstahlblech, anzubringen, wenn der nichtmetallische Werkstoff die zur einstückigen Ausbildung der Laschen oder Zungen mit dem übrigen Teilprofil nötigen Eigenschaften nicht hat.

In weiterer Ausgestaltung wird dabei als nichtmetallischer Werkstoff vorzugsweise Kunststoff oder Holz oder ein Holzwerkstoff oder ein Verbundwerkstoff, insbesondere Kunststoff-Holz-Verbundwerkstoff, verwendet. Damit lassen sich beispielsweise besonders leichte und/oder an zumindest einer Oberfläche dekorative Verbundprofile herstellen.

Zur Erzielung einer besonders hohen Wirtschaftlichkeit des Verfahrens gemäß Erfindung ist vorgesehen, dass als Teilprofile Profile eingesetzt werden, die Teil eines standardisierten Profilsystems mit einer begrenzten Anzahl unterschiedlicher Teilprofile sind und die in einem vorgegebenen, gleichen Raster mit Steckverbindungselementen ausgestattet sind.

Die Lösung des zweiten, das Profilsystem betreffenden Teils der Aufgabe gelingt erfindungsgemäß mit einem Profilsystem zum Herstellen eines Verbundprofils durch Verbinden von zwei oder mehr Teilprofilen miteinander zu dem Verbundprofil mittels Verklebung, wobei
- die Teilprofile zusammenwirkende Steckverbindungselemente an aneinander anlegbaren Flächen der miteinander zu verbindenden Teilprofile aufweisen,
- jeweils ein erstes Steckverbindungselement als aus der Fläche des einen Teilprofils herausgeformte oder als mit der Fläche des einen Teilprofils verbundene Lasche oder Zunge und jeweils ein zweites Steckverbindungselement als in der Fläche des anderen Teilprofils angebrachte Durchbrechung ausgebildet ist,
- die Teilprofile in einer Lage relativ zueinander aufeinanderlegbar sind, ir welcher die Lasche oder Zunge des einen Teilprofils in der Durchbrechung des anderen Teilprofils aufgenommen ist, und
- die Teilprofile relativ zueinander in einer in Laschen- oder Zungenrichtung weisenden Verschieberichtung in der Ebene ihrer aneinander anliegenden, ein- oder beidseitig mit einem Klebstoff versehenen Flächen verschiebbar sind und so die Lasche oder Zunge des einen Teilprofils über einen Rand der Durchbrechung des anderen Teilprofils in Halteeingriff mit dem die

Durchbrechung aufweisenden Teilprofil bringbar ist und dadurch die Teilprofile für ein Aushärten des Klebstoffs gegeneinander lagegerecht fixierbar sind. Mit einem derartigen Profilsystem werden ebenfalls die oben schon im Zusammenhang mit dem erfindungsgemäßen Verfahren erläuterten Vorteile erreicht. Bevorzugt weist jedes Teilprofil zwei oder mehr Laschen oder Zungen und/oder Durchbrechungen auf.

Weiter ist für das Profilsystem vorgesehen, dass die Teilprofile mittels einer vor dem Verbinden der Teilprofile miteinander zu dem Verbundprofil auf wenigstens eine der im verbundenen Zustand aneinander anliegenden Flächen der Teilprofile voll- oder teilflächig aufgetragenen Klebstofflage miteinander verklebbar sind.

Vorzugsweise ist die/jede Lasche oder Zunge als Federklammer geformt, vorzugsweise gestanzt.

Zur Sicherung der Fixierung von Teilprofilen relativ zueinander ist vorgesehen, dass einzelnen oder allen Paaren von erstem und zweitem Steckverbindungselement je eine Rückschubsperre zugeordnet ist.

Dabei ist die/jede Rückschubsperre als jeweils der Lasche oder Zunge benachbarte, mit der zugehörigen Durchbrechung zusammenwirkende Sperrkieme geformt, vorzugsweise gestanzt. Weiterhin ist die Sperrkieme derartig geformt, dass sie aus der Fläche des zweiten Teilprofils schräg nach oben in eine zu der Verschieberichtung entgegengesetzte Richtung weist.

Eine Ausgestaltung des Profilsystems sieht vor, dass das Verbundprofil aus untereinander identischen Teilprofilen besteht.

Eine weitere Ausgestaltung schlägt vor, dass die Teilprofile unter Längsversatz zueinander mauersteinverbundartig zu einem quasi endlosen, auf gewünschte Längen ablängbaren Verbundprofil miteinander verbunden sind.

Dabei ist zweckmäßig mit je zwei in Längsrichtung des Verbundprofils stoßenden Teilprofilen des Verbundprofils jeweils wenigstens ein die Stoßstelle zwischen den zwei Teilprofilen überbrückendes Überbrückungs-Teilprofil verbunden.

Innerhalb des Profilsystems gibt es auch die Möglichkeit, dass das Verbundprofil aus Teilprofilen unterschiedlicher Länge und/oder Breite und/oder Form besteht.

In einer weiteren Ausgestaltung ist vorgesehen, dass ein oder mehrere kürzere und/oder schmalere zweite Teilprofile als lokale Verstärkung(en) mit einem längeren und/oder breiteren ersten Teilprofil zu dem Verbundprofil verbunden sind.

In dem erfindungsgemäßen Profilsystem müssen die Teilprofile nicht nur flache Profile sein. Es ist auch vorgesehen, dass abgewinkelte Teilprofile, insbesondere in Form von Winkelprofilen und/oder U-Profilen und/oder C-Profilen und/oder Z-Profilen oder Treppenprofilen, ohne Kombination oder in Kombination mit einem oder mehreren flachen Teilprofilen, zu einem offenen räumlichen Verbundprofil oder zu einem umfangsseitig geschlossenen Hohl-Verbundprofil miteinander verbindbar oder verbunden sind.

Anstelle einer über seine Länge konstanten Profilhöhe kann das Verbundprofil auch eine über seine Länge gesehen sich verändernden Profilhöhe, insbesondere mit nicht zueinander parallel verlaufenden Biegekanten wenigstens eines im Querschnitt gesehen abgewinkelten Teilprofils des Verbundprofils, aufweisen.

Um mit dem Profilsystem flach bauende Verbundprofilanordnungen mit einander kreuzenden Verbundprofilen erstellen zu können, wird vorgeschlagen, dass zum Ermöglichen einer einander kreuzenden, teilweise ineinander versenkten und/oder einander durchdringenden Anordnung je zweier Verbundprofile wenigstens eines der zwei Verbundprofile an Profilkreuzungsstellen mit einer oder mehreren Ausnehmungen versehen ist.

Es ist auch möglich, dass an Profilkreuzungsstellen zwei Verbundprofile übereinander liegen oder stumpf stoßend angeordnet sind und durch Übergangswinkel mit passend zu den Steckverbindungselementen an den Verbundprofilen angeordneten Steckverbindungselementen miteinander nur mechanisch oder mechanisch und durch Verkleben verbindbar oder verbunden sind.

Erfindungswesentlich ist auch, dass das Profilsystem nicht nur längliche Profile umfassen muss, sondern dass es zusätzlich flächige Elemente, insbesondere Blechplatten, mit passend zu den Steckverbindungselementen an den Verbundprofilen angeordneten Steckverbindungselementen umfassen kann. Somit lassen sich aus Verbundprofilen und flächigen Elementen mit der gleichen Verbindungstechnik, wie sie zur Herstellung der Verbundprofile verwendet wird, auch größere und komplexere Verbundbauteile besonders wirtschaftlich fertigen.

Die Teilprofile bestehen bevorzugt aus Metall mit einer Materialstärke von weniger als 3 mm. Die vorstehend erwähnten flächigen Elemente können in der Regel noch kleinere Materialstärken aufweisen als die Teilprofile.

Zwecks guter Korrosionsbeständigkeit der Verbundprofile bestehen die Teilprofile zweckmäßig aus bandvorbeschichtetem Metall, wie Stahl, Edelstahl oder Aluminium, wobei die Bandvorbeschichtung vorzugsweise eine Verzinkung oder Tauchlackierung ist.

Alternativ können Teilprofile auch aus nichtmetallischem Werkstoff bestehen. Aus diesen nichtmetallischen Teilprofilen können dann nichtmetallische Verbundprofile oder auch Verbundprofile, die teils aus metallischen und teils aus nichtmetallischen Teilprofilen bestehen, gebildet werden. Bei mit Laschen oder Zungen ausgestatteten Teilprofilen aus nichtmetallischem Werkstoff sind dann zweckmäßig daran die Laschen oder Zungen aus einem metallischen Werkstoff, wie Federstahlblech, angebracht, wenn der nichtmetallische Werkstoff die zur mit dem übrigen Teilprofil einstückigen Ausbildung der Laschen oder Zungen nötigen Eigenschaften nicht hat.

In weiterer Ausgestaltung ist dabei der nichtmetallische Werkstoff vorzugsweise Kunststoff oder Holz oder ein Holzwerkstoff oder ein Verbundwerkstoff, insbesondere Kunststoff-Holz-Verbundwerkstoff. Damit lassen sich beispielsweise besonders leichte und/oder an zumindest einer Oberfläche dekorative Verbundprofile herstellen.

Ein besonders wirtschaftliches Profilsystem wird erzielt, wenn seine Teile standardisiert sind und in einem vorgegebenen, gleichen Raster mit Steckverbindungselementen ausgestattet sind.

Zur Lösung des dritten, ein Verbundbauteil betreffenden Teils der Aufgabe wird ein Verbundbauteil vorgeschlagen, welches dadurch gekennzeichnet ist, dass es aus einem oder mehreren Verbundprofilen und aus einem oder mehreren flächigen Elementen des vorstehend beschriebenen Profilsystems gebildet ist.

Vorzugsweise ist das Verbundbauteil ein Nutzfahrzeugaufbau oder ein Transportbehälter oder ein Gebäude oder ein Möbelstück, wobei dessen tragende Struktur(en) aus Verbundprofilen des zuvor beschriebenen Profilsystems gebildet ist/sind. Mit der tragenden Struktur oder den tragenden Strukturen können zur Bildung von Flächen flächige Elemente aus für den jeweiligen Zweck geeigneten Materialien, wie Metallbleche, Kunststoffplatten oder Holz- oder Holzwerkstoffplatten, mittels Verklebung, vorzugsweise unter Zuhilfenahme der oben beschriebenen Steckverbindungs-elemente, verbunden sein.

In weiterer Ausgestaltung des Verbundbauteils ist vorgesehen, dass die Verbundprofile Verbindungselemente und/oder Aufnahmen für flächige Elemente, insbesondere Boden- und/oder Wand- und/ oder Decken- und/oder Türplatten, aufweisen.

Schließlich ist für das Verbundbauteil erfindungsgemäß vorgesehen, dass die darin verbauten Verbundprofile außenseitige und/oder innenseitige Klebstoffträgerflächen zum Ankleben von flächigen Elementen, insbesondere Boden- und/oder Wand- und/ oder Decken- und/oder Türplatten, aufweisen. Die hier anzuklebenden flächigen Elemente können für ihre Lagefixierung ebenfalls Steckverbindungselemente der vorstehend beschriebenen Art aufweisen, die mit Steckverbindungselementen der Verbundprofile zusammenwirken. Alternativ ist es auch möglich, flächige Elemente einzusetzen, die randumgreifend auf die durch Verbundprofile gebildete tragende Struktur aufspannbar sind, wodurch schon ein gewünschtes, lagefixiertes Anlegen des flächigen Elements an die mit Klebstoff beschichteten Klebstoffträgerflächen erreicht wird.

Im Folgenden werden Ausführungsbeispiele der Erfindung anhand einer Zeichnung erläutert. Die Figuren der Zeichnung zeigen:
- Figur 1: je einen Abschnitt von drei Teilprofilen, von denen zwei bereits miteinander verbunden sind und mit denen ein drittes Teilprofil noch zu verbinden ist, mit daran angeordneten Steckverbindungselementen, in Seitenansicht,
- Figur 2: die drei Teilprofile aus Figur 1 während des Verbindens des dritten Teilprofils mit den anderen zwei Teilprofilen, in Seitenansicht,
- Figur 3: die drei Teilprofile aus Figur 1 und 2 nach deren Verbinden miteinander zu einem Verbundprofil, in Seitenansicht,
- Figur 4: ein Verbundprofil, gebildet aus einem ersten, längeren Teilprofil, das in seinem einen Endbereich mit einem zweiten, kürzeren Teilprofil verstärkt ist, in Seitenansicht,
- Figur 5: ein Verbundprofil aus zwei miteinander verbundenen längeren Teilprofilen und zwei damit in deren Endbereichen verbundenen, kürzeren Teilprofilen, in Seitenansicht,
- Figur 6: ein Verbundprofil aus einem ersten Teilprofil in Form eines Winkelprofils und einem zweiten, den kürzeren Schenkel des Winkelprofils und den Eckbereich des Winkelprofils überdeckenden zweiten Teilprofil, in Seitenansicht,
- Figur 7: ein Verbundprofil in Form eines Z-Profils, aus zwei entlang ihrer längeren Schenkel miteinander verbundenen Winkelprofilen und zwei kürzeren, jeweils den kürzeren Schenkel des Winkelprofils und den Eckbereich des Winkelprofils überdeckenden zweiten Teilprofilen, in Seitenansicht,
- Figur 8: ein Verbundprofil in Form eines doppellagigen Z-Profils, aus zwei miteinander über ihre gesamte Fläche verbundenen Z-Profilen und zwei kürzeren, jeweils einen äußeren Schenkel des Z-Profils überdeckenden zweiten Teilprofilen, in Seitenansicht,
- Figur 9: ein Verbundprofil in Form eines Doppel-T-Profils, gebildet aus zwei durchlaufenden C-förmigen und zwei durchlaufenden flachen Teilprofilen, in Ansicht schräg von oben,
- Figur 10: das Verbundprofil aus Figur 9 in einer vergrößerten Stirnansicht,
- Figur 11: einen Endbereich eines Verbundprofil in Form eines Rechteck-Hohlprofils mit zwei stirnseitigen Verbindungsflanschen, gebildet aus vier Teilprofilen, in Ansicht schräg von oben,
- Figur 12: das Verbundprofil aus Figur 11 in einer vergrößerten Stirnansicht,
- Figur 13: einen Endbereich eines gegenüber Figur 11 geänderten Verbund-profils in Form eines Rechteck-Hohlprofils mit zwei stirnseitigen Verbindungsflanschen, gebildet aus vier Teilprofilen, in Ansicht schräg von oben,
- Figur 14: das Verbundprofil aus Figur 13 in einer vergrößerten Stirnansicht,
- Figur 15: einen Ausschnitt aus zwei miteinander verbundenen Teilprofilen zusammen mit einem Paar von Steckverbindungselementen und einer Rückschubsperre, in Ansicht schräg von oben,
- Figur 16: den Ausschnitt gemäß Figur 15 in einer dieser gegenüber verdrehten Ansicht schräg von oben,
- Figur 17: ein Verbundprofil in Form eines Doppel-T-Profils, gebildet aus vier C-förmigen und vier flachen Teilprofilen, wobei jeweils zwei Teilprofile in Längsrichtung des Verbundprofils gesehen an Stoßstellen aneinander anschließen, in Ansicht schräg von oben,
- Figur 18: das Verbundprofil aus Figur 17 in einer vergrößerten Teilansicht auf eine oberseitige Stoßstelle des Verbundprofils,
- Figur 19: ein Verbundprofil, gebildet aus zwei Teilprofilen, das als Runge für einen LKW-Aufbau ausgeführt ist, in Ansicht schräg von oben,
- Figur 20: das Verbundprofil aus Figur 19 in einer vergrößerten Stirnansicht,
- Figur 21: ein Verbundprofil in Form eines Doppel-T-Profils, gebildet aus zwei C-förmigen und drei flachen Teilprofilen, in einer Stirnansicht,
- Figur 22: ein Verbundprofil mit einer über seine Länge zwischen einem Maß hₘᵢₙ an seinen Enden und einem Maß hₘₐₓ in seiner Längsmitte variierenden Profilhöhe h, in Seitenansicht,
- Figur 23: ein aus zwei Verbundprofilen nach Figur 22 und einem hier "durchsichtig" dargestellten flächigen Element gebildetes Verbundbauteil, in Ansicht schräg von oben,
- Figur 24: das Verbundbauteil aus Figur 23 in einer Unteransicht,
- Figur 25: ein aus zwei Teilprofilen gebildetes Verbundprofil in Form eines Rechteck-Hohlprofils, mit seitlichen Ausnehmungen, in Ansicht schräg von oben,
- Figur 26: zwei parallel angeordnete Verbundprofile gemäß Figur 25 mit neben den Ausnehmungen angebrachten Übergangswinkeln, in Ansicht schräg von oben,
- Figur 27: das in Figur 26 linke Verbundprofil in einer vergrößerten Stirnansicht,
- Figur 28: die zwei Verbundprofile aus Figur 26 mit drei die Verbundprofile rechtwinklig kreuzend durchsetzenden, zueinander parallelen Teilprofilen, in Ansicht schräg von oben,
- Figur 29: die Profilanordnung aus Figur 28 mit zusätzlich auf den kreuzenden Teilprofilen angebrachten weiteren Teilprofilen, in Ansicht schräg von oben,
- Figur 30: die Profilanordnung aus Figur 29 mit einem darauf angebrachten flächigen Element, in Ansicht schräg von oben,
- Figur 31: die Anordnung aus Figur 30 mit auf den kreuzenden Verbundprofilen angebrachten, die Längsränder des flächigen Elements überdeckenden weiteren Teilprofilen, in Ansicht schräg von oben,
- Figur 32: eine Profilkreuzungsstelle der Anordnung aus Figur 31 in einer vergrößerten Seitenansicht,
- Figur 33: ein Verbundprofil mit zwei endseitig daran angebrachten Scharnierelementen, in Ansicht schräg von oben,
- Figur 34: ein flächiges Element mit Steckverbindungselementen, als Teil des Profilsystems, in Ansicht schräg von oben,
- Figur 35: das flächige Element aus Figur 34 mit einem ersten daran angebrachten, in Elementlängsrichtung verlaufenden Teil- oder Verbundprofil, in Ansicht schräg von oben,
- Figur 36: das flächige Element aus Figur 34 und 35 mit weiteren daran angebrachten, in Längs- und Querrichtung des flächigen Elements verlaufenden, teils endseitig Scharnierelemente aufweisenden Teil- oder Verbundprofilen, in Ansicht schräg von oben,
- Figur 37: eine Profilkreuzungsstelle der Anordnung aus Figur 36 in einer vergrößerten Ansicht schräg von oben,
- Figur 38: die Anordnung aus Figur 36 mit daran angebrachten Riegelelementen und Verriegelungsstangen, in Ansicht schräg von oben,
- Figur 39: ein nach Anbringen von randseitigen Teil- oder Verbundprofilen an den Längsrändern des flächigen Elements vervollständigtes Verbundbauteil in Form einer LKW-Aufbautür, in Ansicht schräg von oben,
- Figur 40: ein länglich-rechteckiges flächiges Element mit Steckverbindungselementen, als Teil des Profilsystems, in Ansicht schräg von oben,
- Figur 41: das flächige Element aus Figur 40 in einem mit einem weiteren, ebenfalls Steckverbindungselemente aufweisenden, größeren rechteckigen flächigen Element verbundenen Zustand, in Ansicht schräg von oben,
- Figur 42: die Anordnung aus Figur 41 zusammen mit einem damit verbundenen, sich über beide flächigen Elemente erstreckenden ersten Teilprofil, in Ansicht schräg von oben,
- Figur 43: die Anordnung aus Figur 42 zusammen mit einem weiteren damit verbundenen, sich ebenfalls über beide flächigen Elemente erstreckenden weiteren ersten Teilprofil, in Ansicht schräg von oben,
- Figur 44: die Anordnung aus Figur 43 zusammen mit mehreren weiteren damit verbundenen, sich parallel zueinander über beide flächigen Elemente erstreckenden ersten Teilprofilen und quer dazu zwischen diesen verlaufenden zweiten Teilprofilen, in Ansicht schräg von oben,
- Figur 45: ein nach Anbringen von randseitigen Teil- oder Verbundprofilen an zwei einander gegenüberliegenden Rändern der flächigen Elemente vervollständigtes Verbundbauteil in Form einer Bodenoder Wand- oder Deckensegments eines Nutzfahrzeugaufbaus, in Ansicht schräg von oben,
- Figur 46: je einen Abschnitt von drei Teilprofilen, von denen zwei bereits miteinander verbunden sind und mit denen ein drittes Teilprofil noch zu verbinden ist, mit daran angeordneten Steckverbindungselementen, in einer gegenüber der Figur 1 geänderten Ausführung, in Seitenansicht, und
- Figur 47: je einen Abschnitt von drei Teilprofilen, von denen zwei bereits miteinander verbunden sind und mit denen ein drittes Teilprofil noch zu verbinden ist, mit daran angeordneten Steckverbindungselementen, in einer weiteren gegenüber der Figur 1 geänderten Ausführung, in Seitenansicht.

In der folgenden Figurenbeschreibung sind gleiche Teile in den verschiedenen Zeichnungsfiguren stets mit den gleichen Bezugszeichen versehen, sodass nicht zu jeder Zeichnungsfigur alle Bezugszeichen erneut erläutert werden müssen.

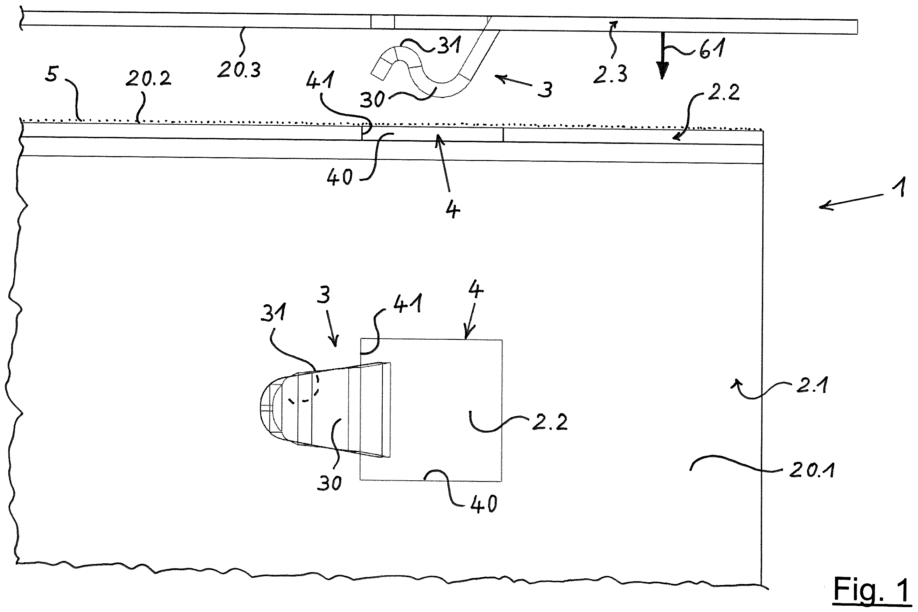

Figur 1 der Zeichnung zeigt in Seitenansicht je einen Abschnitt von drei Teilprofilen 2.1, 2.2, 2.3, von denen die zwei Teilprofile 2.1, 2.2 bereits miteinander verbunden sind und mit denen ein drittes Teilprofil 2.2 noch zu verbinden ist, um ein Verbundprofil zu bilden. Die Teilprofile 2.1 und 2.2 sind hier zwei deckungsgleich miteinander verbundene Winkelprofile. Das dritte Teilprofil 2.3 ist hier ein flaches Profil. Die Teilprofile 2.1, 2.2, 2.3 bestehen hier beispielsweise aus gegen Korrosion beschichtetem Stahlblech.

An den Teilprofilen 2.1, 2.2, 2.3 sind jeweils zusammenwirkende, erste und zweite Steckverbindungselemente 3, 4 angeordnet, die unten in Figur 1 in Draufsicht und oben in Figur 1 in Seitenansicht sichtbar sind.

Die ersten Steckverbindungselemente 3 sind jeweils durch eine Lasche oder Zunge 30 gebildet, die aus der Fläche des zugehörigen Teilprofils 2.1, 2.2, 2.3 herausgeformt, vorzugsweise gestanzt, ist. Die Lasche oder Zunge 30 besitzt eine S-förmig gebogene Form mit einem dem zugehörigen Teilprofil 2.1, 2.2, 2.3 zugewandten, von diesem beanstandeten Anlagebereich 31.

Das zweite Steckverbindungselement 4 besteht jeweils aus einer etwa quadratischen Durchbrechung 40 im Teilprofil 2.1, 2.2, 2.3, wobei die Durchbrechung 40 zumindest geringfügig größer ist als die Lasche oder Zunge 30 und ebenfalls vorzugsweise durch Stanzen erzeugt wird.

Zum Bilden eines Verbundprofils 1 werden die drei in Figur 1 dargestellten Teilprofile 2.1, 2.2, 2.3 mittels Verklebung unter Unterstützung durch jeweils wenigstens zwei zusammenwirkende Steckverbindungselemente 3, 4 an aneinander anliegenden Flächen, von denen hier die Flächen 20.2 und 20.3 der Teilprofile 2.2 und 2.3 sichtbar sind, miteinander verbunden. Dazu werden jeweils wenigstens zwei der Teilprofile 2.1, 2.2, 2.3 in einer Lage und einer Auflegerichtung 61 relativ zueinander aufeinandergelegt, in welcher die Lasche oder Zunge 30 des einen Teilprofils 2.1, 2.2, 2.3 in der Durchbrechung 40 des anderen Teilprofils 2.1, 2.2, 2.3 aufgenommen wird. Dann werden die miteinander zu verbindenden Teilprofile 2.1, 2.2, 2.3 relativ zueinander in einer in Laschen- oder Zungenrichtung weisenden Verschieberichtung 62 in der Ebene der aneinander anliegenden, ein- oder beidseitig mit einer Klebstofflage 5 versehenen Flächen 20.2, 20.3 verschoben und es wird so die Lasche oder Zunge 30 des einen Teilprofils 2.1, 2.2, 2.3 über einen Rand 41 der Durchbrechung 40 des anderen Teilprofils 2.1, 2.2, 2.3 in Halteeingriff, vorzugsweise mit leichtem Klemmsitz, mit dem die Durchbrechung 40 aufweisenden Teilprofil 2.1, 2.2, 2.3 gebracht. Auf diese Weise werden die Teilprofile 2.1, 2.2, 2.3 für ein Aushärten des Klebstoffs der Klebstofflage 5 gegeneinander lagegerecht fixiert, ohne dass dafür spezielle externe Fixiervorrichtungen angebracht und später wieder entfernt werden müssen.

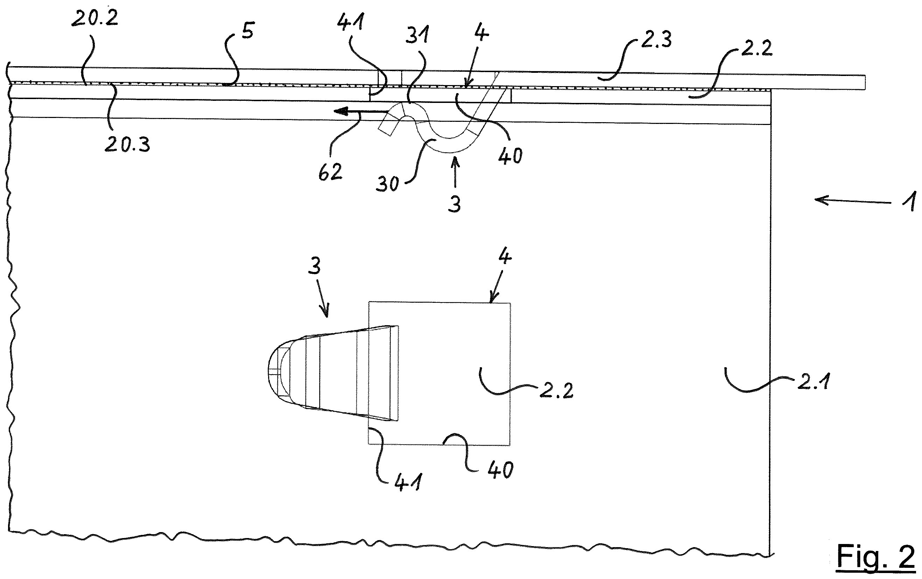

Figur 2 zeigt die drei Teilprofile 2.1, 2.2, 2.3 aus Figur 1 während des Verbindens des dritten Teilprofils 2.3 mit den anderen zwei Teilprofilen 2.1, 2.2, wieder in Seitenansicht. Das dritte Teilprofil 2.3 ist hier mit seiner nach unten weisenden Fläche 20.3 in der Auflegerichtung 61 so auf die die Klebstofflage 5 tragende Fläche 20.2 des zweiten Teilprofils 2.2 aufgelegt, dass die einen Teil des dritten Teilprofils 2.3 bildende Lasche oder Zunge 30 durch die Durchbrechung 40 in zweiten Teilprofil 2.2 hindurch ragt.

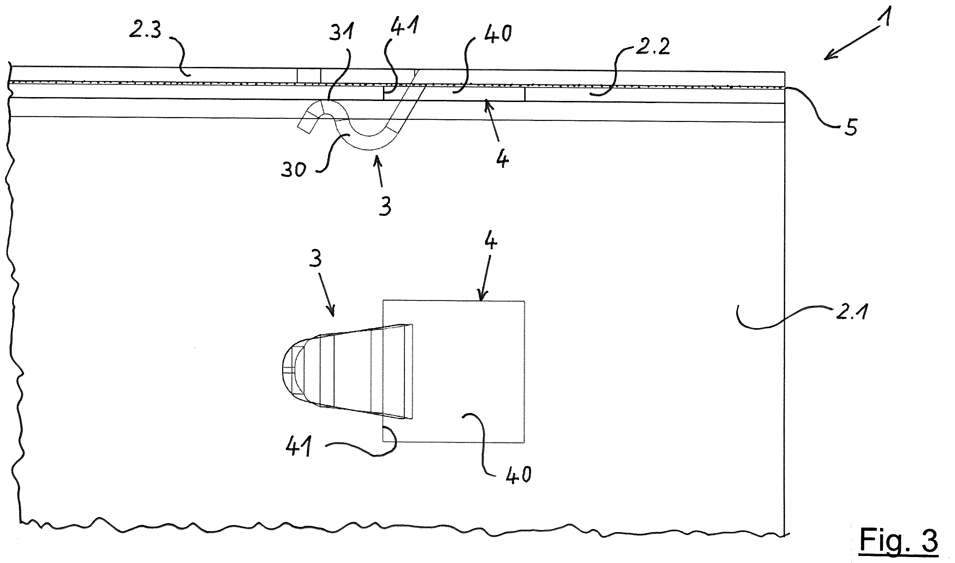

Durch eine daran anschließende Verschiebung des dritten Teilprofils 2.3 in der Verschieberichtung 62 wird die Lasche oder Zunge 30 über den Rand 41 der zugehörigen Durchbrechung 40 im zweiten Teilprofil 2.2 geschoben und so in Halteeingriff mit letzterem gebracht. Dieser abschließende Verbindungszustand des so hergestellten Verbundprofils 1 ist in der Figur 3 der Zeichnung, wieder in Seitenansicht, dargestellt.

Die Maßabstimmung zwischen ersten und zweiten Steckverbindungselementen 3, 4 kann, je nach Bedarf, entweder mit einem Positionsjustierungen erlaubenden größeren Spiel oder alternativ mit engen Toleranzen in allen Flächenrichtungen der zu verbindenden Teilprofile erfolgen.

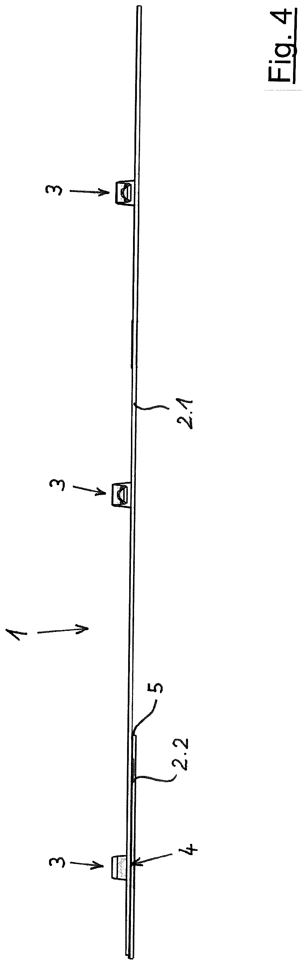

Figur 4 zeigt ein Verbundprofil 1, gebildet aus einem ersten, längeren Teilprofil 2.1, das in seinem einen, in Figur 4 linken Endbereich unterseitig mit einem zweiten, kürzeren Teilprofil 2.2 lokal verstärkt ist, in Seitenansicht. Auch hier erfolgt das Verbinden der Teilprofile 2.1, 2.2 miteinander mittels einer Klebstofflage 5 zwischen diesen unter Fixierung der relativen Lage zueinander durch das Zusammenwirken der Steckverbindungselemente 3, 4.

Wie in Figur 4 sichtbar ist, sind am ersten Teilprofil 2.1 mittig und rechts zwei erste Steckverbindungselemente 3 in einem Abstand voneinander angeordnet, die hier nicht genutzt werden, aber bei Bedarf für ein Verbinden des Verbundprofils 1 gemäß Figur 4 mit einem oder mehreren weiteren Teilprofilen genutzt werden können.

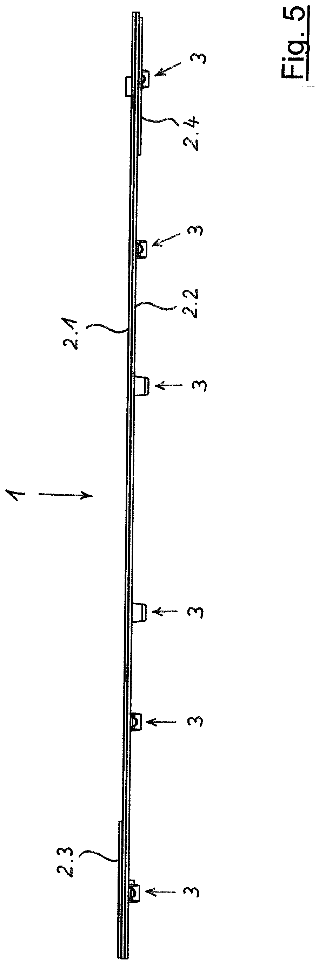

Figur 5 zeigt ein Verbundprofil 1 aus zwei miteinander verbundenen längeren flachen Teilprofilen 2.1, 2.2 und zwei damit in deren Endbereichen verbundenen, kürzeren flachen Teilprofilen 2.3, 2.4, wieder in Seitenansicht. Auch hier sind zwischen allen aneinander anliegenden Flächen der das Verbundprofil 1 bildenden Teilprofile 2.1 - 2.4 ganz- oder teilflächige, hier nicht eigens dargestellte Klebstofflagen angeordnet. Das zum Aushärten des Klebstoffs der Klebstofflagen nötige Fixieren der beteiligten Teilprofile 2.1 - 2.4 relativ zueinander erfolgt auch hier wieder über zusammenwirkende erste und zweite Steckverbindungs-elemente 3, 4, die an den Teilprofilen 2.1 - 2.4 vorgesehen sind. Hiermit wird ein Verbundprofil 1 geschaffen, welches über seine gesamte Länge durch seine Zweilagigkeit verstärkt ist und in seinen Endbereichen zudem lokal verstärkt ist.

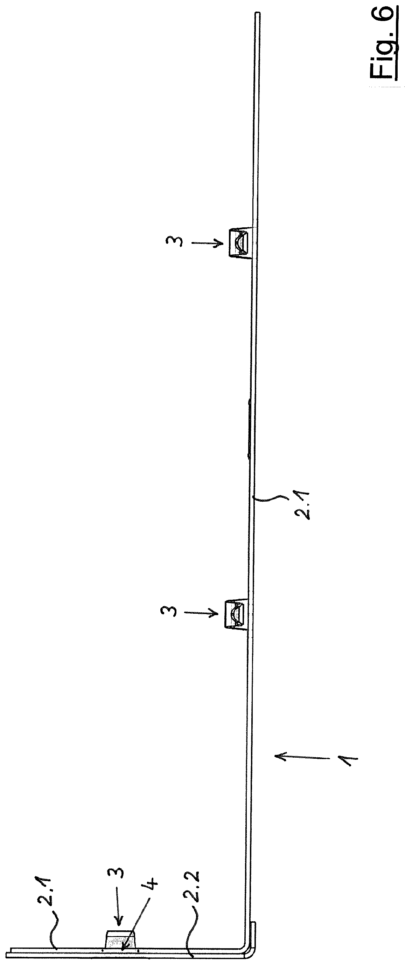

Figur 6 zeigt ein Verbundprofil 1 aus einem ersten Teilprofil 2.1 in Form eines Winkelprofils und einem zweiten, den kürzeren Schenkel des winkelförmigen ersten Teilprofil 2.1 und dessen Eckbereich überdeckenden zweiten Teilprofil 2.2, wieder in Seitenansicht. Zwischen den aneinander anliegenden Flächen der das Verbundprofil 1 bildenden Teilprofile 2.1 und 2.2 sind auch hier ganz- oder teilflächige, nicht eigens dargestellte Klebstofflagen angeordnet und das zum Aushärten des Klebstoffs nötige Fixieren der Teilprofile 2.1 und 2.2 relativ zueinander erfolgt auch hier über die zusammenwirkenden ersten und zweiten Steckverbindungselemente 3, 4, die an den Teilprofilen 2.1 und 2.2 vorgesehen sind. Auf diese Weise wird ein winkelförmiges Verbundprofil 1 gebildet, welches im Bereich seines kürzeren Schenkels und seiner Biegekante lokal verstärkt ist.

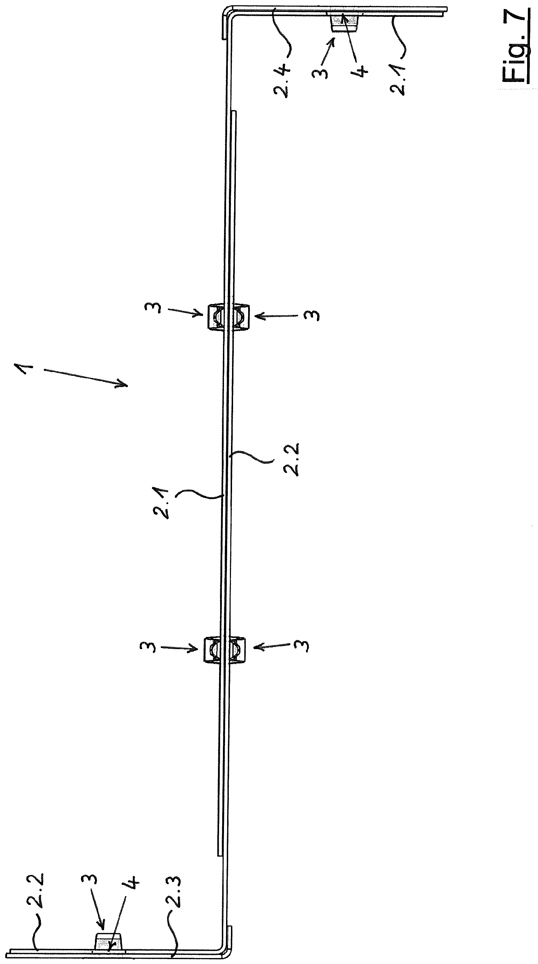

Figur 7 zeigt ein Verbundprofil 1 in Form eines Z-Profils, gebildet aus zwei entlang ihrer längeren Schenkel miteinander verbundenen winkelförmigen Teilprofilen 2.1, 2.2 und zwei kürzeren, jeweils den kürzeren Schenkel der ersten zwei Teilprofile 2.1, 2.2 und deren Eckbereiche überdeckenden weiteren Teilprofilen 2.3, 2.4, auch hier in Seitenansicht. Zwischen den aneinander anliegenden Flächen der das Verbundprofil 1 bildenden Teilprofile 2.1 - 2.4 sind wieder ganz- oder teilflächige, nicht eigens dargestellte Klebstofflagen angeordnet und das zum Aushärten des Klebstoffs nötige Fixieren der Teilprofile 2.1 - 2.4 relativ zueinander erfolgt auch hier über die zusammenwirkenden ersten und zweiten Steckverbindungselemente 3, 4, die an den Teilprofilen 2.1 - 2.4 vorgesehen sind. Auf diese Weise wird ein Z-för-miges Verbundprofil 1 gebildet, welches im Bereich seiner äußeren Schenkel und seiner Biegekanten lokal verstärkt sowie über den größten Teil der Länge seines Mittelteils doppellagig und somit auch dort verstärkt ausgeführt ist.

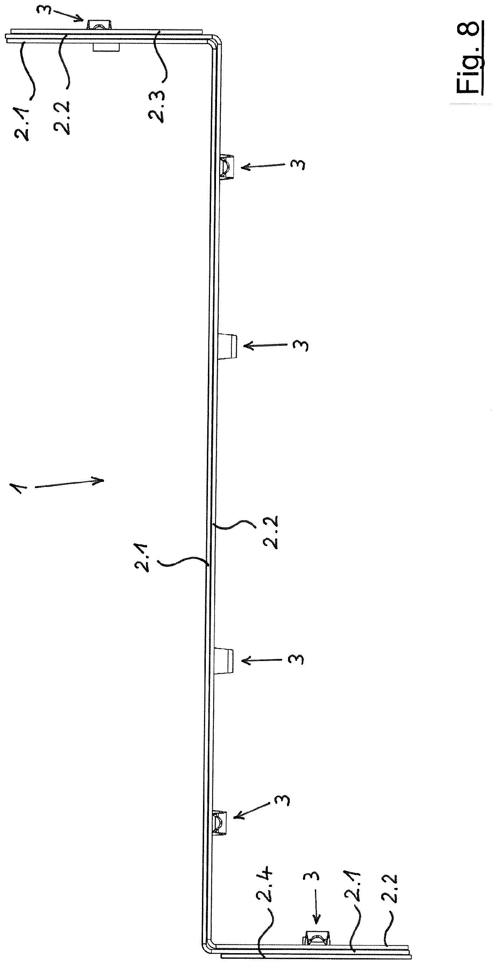

Figur 8 zeigt ein Verbundprofil 1 in Form eines doppellagigen Z-Profils, aus zwei miteinander über ihre gesamte Fläche verbundenen Z-förmigen Teilprofilen 2.1, 2.2 und zwei kürzeren, jeweils einen äußeren Schenkel der Z-förmigen Teilprofile 2.1, 2.2 überdeckenden zweiten Teilprofilen 2.3, 2.4. Zwischen den aneinander anliegenden Flächen der das Verbundprofil 1 bildenden Teilprofile 2.1 - 2.4 sind wieder ganz- oder teilflächige, nicht eigens dargestellte Klebstofflagen angeordnet und das zum Aushärten des Klebstoffs nötige Fixieren der Teilprofile 2.1 - 2.4 relativ zueinander erfolgt auch hier über die zusammenwirkenden ersten und zweiten Steckverbindungselemente 3, 4, die an den Teilprofilen 2.1 - 2.4 vorgesehen sind. Auf diese Weise wird hier ein Z-förmiges Verbundprofil 1 gebildet, welches über seine gesamte Fläche doppellagig sowie im Bereich seiner äußeren Schenkel zusätzlich lokal verstärkt, konkret dreilagig, ausgeführt ist.

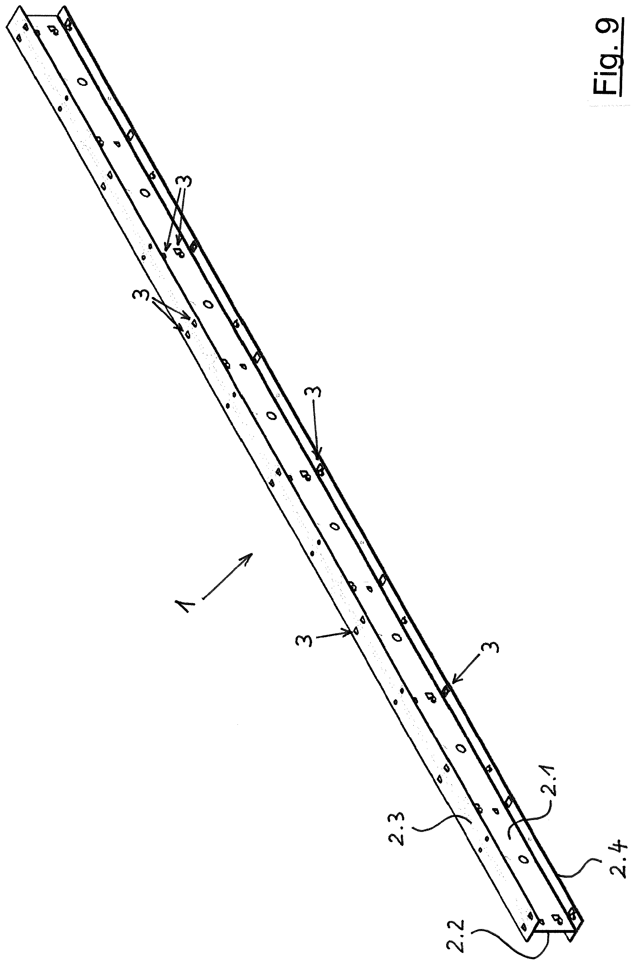

Figur 9 zeigt ein Verbundprofil 1 in Form eines Doppel-T-Profils, gebildet aus zwei durchlaufenden, mittleren C-förmigen Teilprofilen 2.1, 2.2 und zwei durchlaufenden flachen, oberen und unteren Teilprofilen 2.3, 2.4, in Ansicht schräg von oben. Die C-förmigen Teilprofile 2.1, 2.2 sind Rücken an Rücken zueinander angeordnet und miteinander verbunden. Das flache obere Teilprofil 2.3 ist mit den beiden oberen C-Schenkeln der Teilprofile 2.1, 2.2 zu einem Obergurt verbunden. Das flache untere Teilprofil 2.4 ist mit den beiden unteren C-Schenkeln der Teilprofile 2.1, 2.2 zu einem Untergurt verbunden.

Alle Verbindungen zwischen den hier verwendeten Teilprofilen 2.1 - 2.4 erfolgen in der zuvor beschriebenen Art und Weise mittels Verklebung unter Lagefixierung durch die Steckverbindungselemente 3, 4.

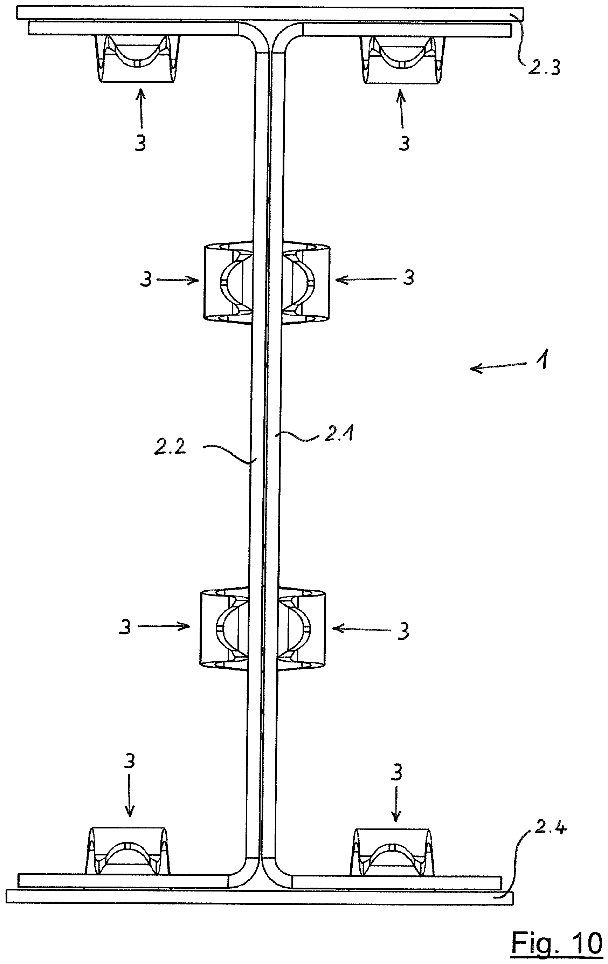

Figur 10 zeigt das Verbundprofil 1 aus Figur 9 in einer vergrößerten Stirnansicht. Den mittleren Teil oder Steg des ein Doppel-T-Profil bildenden Verbundprofils 1 bilden die zwei Rücken an Rücken miteinander verbundenen C-förmigen Teilprofile 2.1, 2.2. Die an dem durch die zwei Teilprofile 2.1, 2.2 gebildeten mittleren Profilteil angeordneten Steckverbindungselemente 3 sind jeweils mit Versatz in Profillängsrichtung zueinander angeordnet, so dass jeweils ein erstes Steckverbindungselement 3 jedes Teilprofils 2.1, 2.2 einem in Figur 10 nicht sichtbaren zweiten Steckverbindungselement 4 des jeweils anderen Teilprofils 2.2, 2.1 gegenüberliegt.

Den oberen Teil und den unteren Teil des Verbundprofils 1 nach Figur 10 bilden die flachen Teilprofile 2.3, 2.4, die jeweils mit ersten Steckverbindungselementen 3 ausgeführt sind, welche durch in Figur 10 nicht sichtbare zweite Steckverbindungselemente in Form der Durchbrechungen in den seitlichen Schenkeln der ersten, C-förmigen Teilprofile 2.1, 2.2 hindurchgreifen.

Alle Verbindungen zwischen den hier verwendeten Teilprofilen 2.1 - 2.4 erfolgen in der zuvor beschriebenen Art und Weise mittels Verklebung unter Lagefixierung durch die Steckverbindungselemente 3, 4.

Gemäß dem in den Figuren 9 und 10 gezeigten Beispiel wird aus vier einfach herstellbaren Teilprofilen 2.1 - 2.4 ein Verbundprofil 1 in Form eines Doppel-T-Profils gebildet.

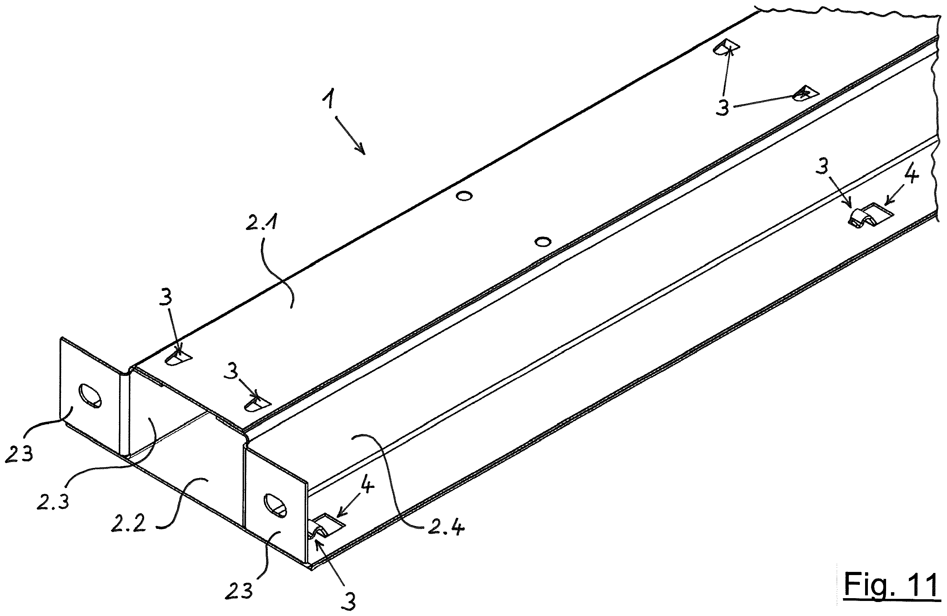

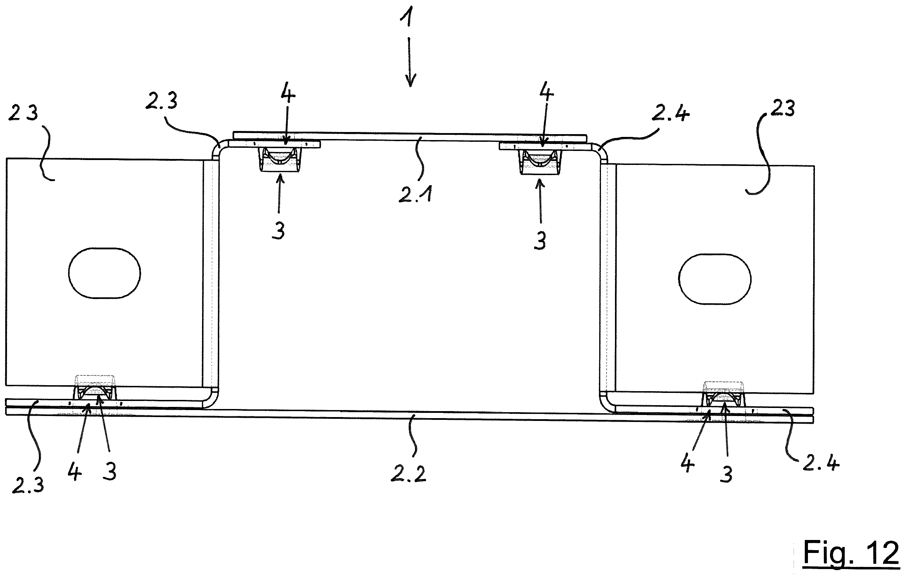

Die Figuren 11 und 12 zeigen in Ansicht schräg von oben sowie in vergrößerter Stirnansicht einen Endbereich eines aus vier Teilprofilen 2.1 - 2.4 gebildeten Verbundprofils 1 in Form eines Rechteck-Hohlprofils mit zwei nach außen vorragenden Profilflügeln und mit zwei stirnseitigen Verbindungsflanschen 23.

Das eine obere Wand des Verbundprofils 1 bildende Teilprofil 2.1 ist hier ein flaches, streifenförmiges Profil mit mehreren ersten Steckverbindungselementen 3. Das eine untere Wand des Verbundprofils 1 bildende zweite Teilprofil 2.2 ist hier ebenfalls ein flaches, streifenförmiges Profil, welches aber etwa die doppelte Breite des ersten Teilprofils 2.2 aufweist. Die linke und die rechte vertikale Seitenwand des Verbundprofils 1 nach Figur 11 werden durch zwei weitere, doppelt abgewinkelte, Z-förmige Teilprofile 2.3, 2.4 gebildet, welche an ihrem Ende auch die erwähnten stirnseitigen Verbindungsflansche 23 aufweisen.

Die hier zur Bildung des Verbundprofils 1 verwendeten Teilprofile 2.1 - 2.4 weisen einander überlappende Profilbereiche auf, in denen sie mittels zuvor erläuterter Verklebung mit hier nicht eigens dargestellten Klebstofflagen unter Lagefixierung relativ zueinander durch die zusammenwirkenden Steckverbindungselemente 3, 4 an den Teilprofilen 2.1 - 2.4 miteinander verbunden sind.

Mit dem Ausführungsbeispiel gemäß den Figuren 11 und 12 wird ein Verbundprofil 1 aus einfach herstellbaren Teilprofilen 2.1 - 2.4 gebildet, welches die Form eines Rechteck-Hohlprofils mit zwei hier unten liegenden, sich seitlich nach außen erstreckenden, vorragenden Profilflügeln und mit endseitigen Verbindungsflanschen oder -laschen 23 aufweist.

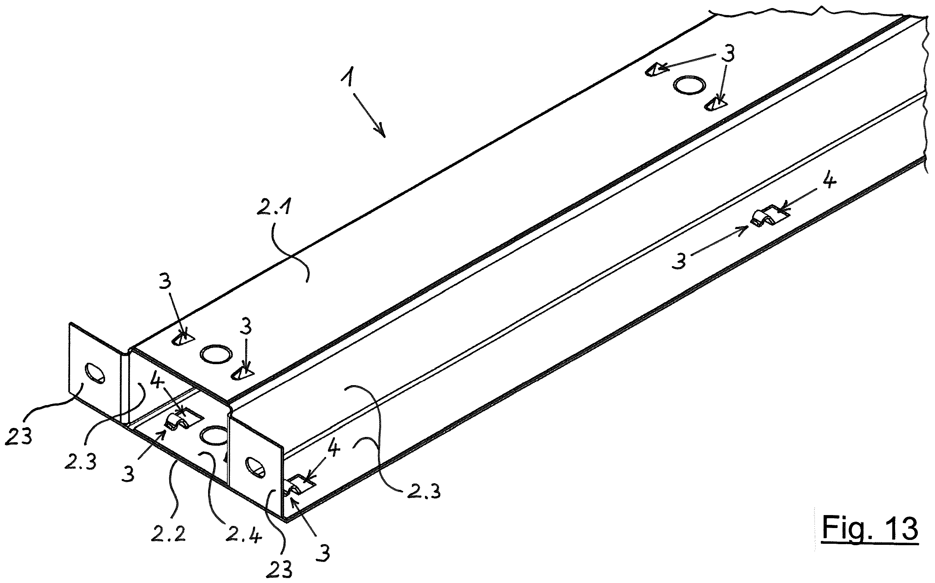

Die Verbindungsflansche oder -laschen 23 können zur konventionellen Verbindung des Verbundprofils 1 mit weiteren Bauteilen genutzt werden, beispielsweise mittels Schrauben, die durch in den Verbindungsflanschen oder -laschen 23 angebrachte, in den Figuren 12 und 13 dargestellte Öffnungen oder Bohrungen 23' hindurchgeführt werden können.

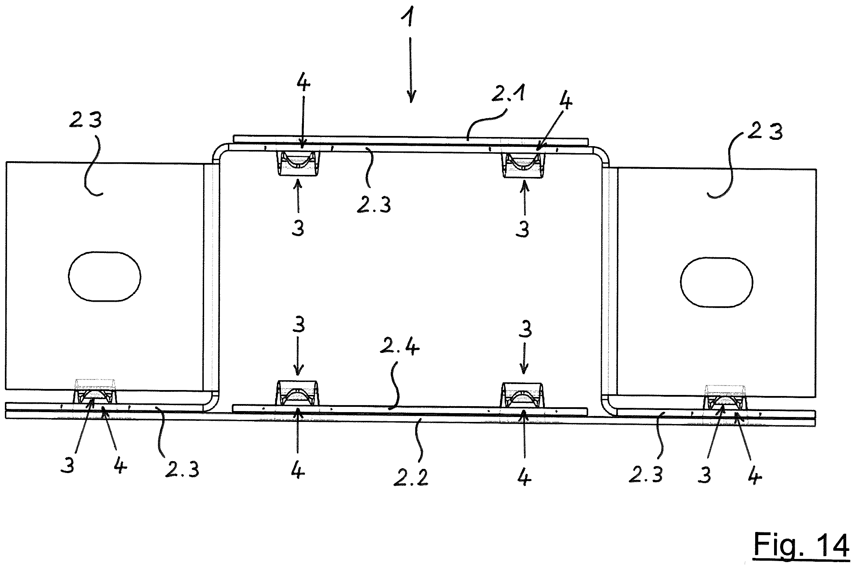

Figur 13 zeigt einen Endbereich und Figur 14 zeigt eine vergrößerten Stirnansicht eines gegenüber dem Ausführungsbeispiel nach Figur 11 und 12 geänderten Verbundprofils, wieder in Form eines Rechteck-Hohlprofils mit zwei seitlichen Profilflügeln und mit zwei stirnseitigen Verbindungsflanschen, gebildet aus vier Teilprofilen.

Auch bei diesem Ausführungsbeispiel des Verbundprofils 1 ist ein erstes Teilprofil 2.1 durch ein flaches Profil mit ersten Steckverbindungselementen 3 gebildet, welches an einer Oberseite des Verbundprofils 1 liegt. Ein zweites, flaches Teilprofil 2.2 bildet die Unterseite des Verbundprofils 1 und weist ebenfalls mehrere erste Steckverbindungselemente 3 auf. Die Breite des zweiten Teilprofils 2.2 ist auch hier etwa doppelt so groß wie die Breite des ersten Teilprofils 2.1.

Das hier verwendete dritte Teilprofil 2.3 hat die Form eines Hutprofils, welches in seinem oberen Abschnitt mit dem ersten Teilprofil 2.1 und in seinen beiden seitlichen unteren Abschnitten mit dem zweiten Teilprofil 2.2 verbunden ist. An seinem Stirnende weist das dritte Teilprofil 2.3 wieder zwei seitlich nach außen weisende, rechtwinklig abgebogene Verbindungsflansche oder -laschen 23 auf.

Das hier verwendete vierte Teilprofil 2.4 ist wieder ein flaches Profil, dessen Abmessungen hier mit denen des ersten Teilprofils 2.1 im Wesentlichen übereinstimmen und das mit dem mittleren, innerhalb der vertikalen Abschnitte des dritten Teilprofils 2.3 liegenden Bereich der Oberseite des zweiten Teilprofils 2.2 verbunden ist.

Die hier zur Bildung des Verbundprofils 1 verwendeten Teilprofile 2.1 - 2.4 weisen einander überlappende sowie aneinander anliegende flächige Profilbereiche auf, in denen sie mittels zuvor erläuterter Verklebung mit hier nicht eigens dargestellten Klebstofflagen unter Lagefixierung relativ zueinander durch die zusammenwirkenden Steckverbindungselemente 3, 4 an den Teilprofilen 2.1 - 2.4 miteinander verbunden sind.

Mit dem Ausführungsbeispiel gemäß den Figuren 13 und 14 wird ebenfalls ein Verbundprofil 1 aus einfach herstellbaren Teilprofilen 2.1 - 2.4 gebildet, welches die Form eines Rechteck-Hohlprofils mit zwei hier unten liegenden, sich seitlich nach außen erstreckenden, vorragenden Profilflügeln und mit endseitigen Verbindungsflanschen oder -laschen 23 aufweist. Im Unterschied zu dem Verbundprofil 1 gemäß den Figuren 11 und 12 ist das Verbundprofil 1 gemäß den Figuren 13 und 14 im Bereich seiner oberen und unteren Wand doppellagig ausgeführt und somit dort verstärkt.

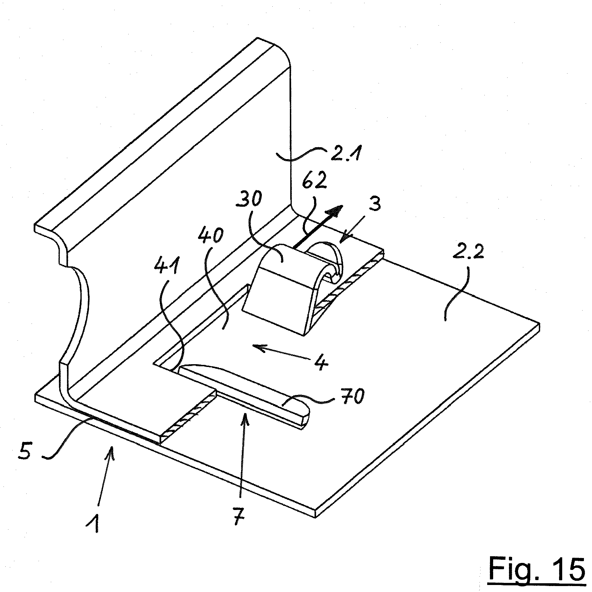

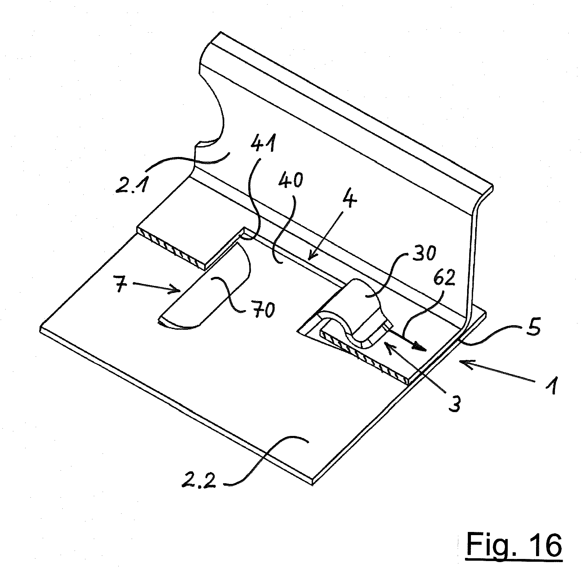

Die Figuren 15 und 16 zeigen jeweils einen Ausschnitt aus zwei miteinander verbundenen Teilprofilen 2.1, 2.2, zusammen mit einem Paar von Steckverbindungselementen 3, 4 und einer Rückschubsperre 7, in zwei verschiedenen Ansichten schräg von oben.

Die zusammenwirkenden Steckverbindungselemente 3, 4 sind hier wie bei dem Beispiel gemäß den Figuren 1 bis 3 der Zeichnung erläutert ausgeführt. Zusätzlich ist die Rückschubsperre 7 vorgesehen, welche gewährleistet, dass zwei einmal zusammengefügte Teilprofile 2.1, 2.2 sich nicht mehr entgegen der auch schon in Figur 2 gezeigten und erläuterten Verschieberichtung 62 relativ zueinander bewegen können. Dazu ist gemäß dem in den Figuren 15 und 16 gezeigten Ausführungsbeispiel die Rückschubsperre 7 als aus der Fläche des das erste Steckverbindungselement 3 in Form der Lasche oder Zunge 30 aufweisenden zweiten Teilprofils 2.2 herausgedrückte, zweckmäßig gestanzte, Sperrkieme 70 ausgebildet. Die Sperrkieme 70 weist aus der Fläche des zweiten Teilprofils 2.2 schräg nach oben in eine zu der Verschieberichtung 62 entgegengesetzte Richtung.

Bei dem Verbindungsvorgang der beiden Teilprofile 2.1, 2.2 mit deren Relativverschiebung gemäß der Verschieberichtung 62 gleitet das erste Teilprofil 2.1 mit seiner Unterseite über die Sperrkieme 70 hinweg, bis die Sperrkieme 70 am Ende der Verschiebung vollständig innerhalb der Durchbrechung 40 zu liegen kommt. In dem in den Figuren 15 und 16 gezeigten verbundenen Zustand der beiden Teilprofile 2.1, 2.2 liegt die schräg nach oben weisende freie Kante der Sperrkieme 70 an einem von dem ersten Steckverbindungselement 3 entfernt liegenden Rand 41 des zweiten Steckverbindungselements 4 in Form der Durchbrechung 40 im ersten Teilprofil 2.1 an und jede weitere Relativverschiebung der beiden Teilprofile 2.1, 2.2 relativ zueinander, insbesondere entgegen der Verschieberichtung 62, ist nun unterbunden.

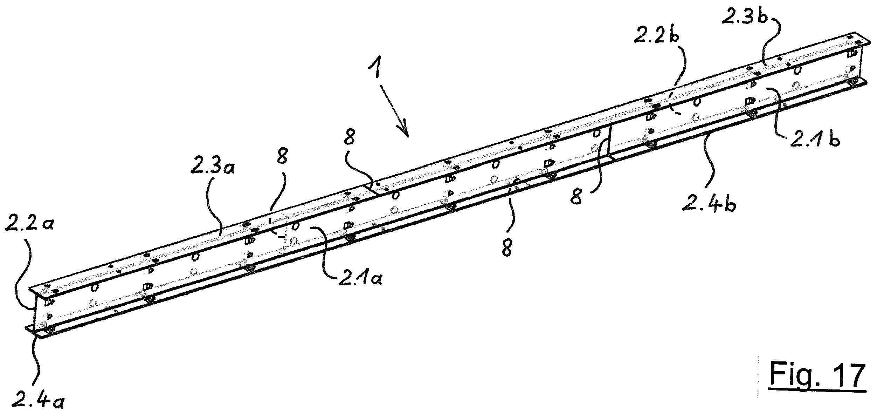

Figur 17 zeigt in Ansicht schräg von oben ein Verbundprofil 1 in Form eines Doppel-T-Profils, gebildet aus vier C-förmigen Teilprofilen 2.1a, 2.1b, 2.2a, 2.2b und vier flachen Teilprofilen 2.3a, 2.3b, 2.4a, 2.4b, wobei jeweils zwei Teilprofile 2.1a und 2.1b, 2.2a und 2.2b, 2.3a und 2.3b, 2.4a und 2.4b in Längsrichtung des Verbundprofils 1 gesehen an Stoßstellen 8 aneinander anschließen.

Die hier zur Bildung des Verbundprofils 1 verwendeten Teilprofile 2.1a, 2.1b, 2.2a, 2.2b, 2.3a, 2.3b, 2.4a, 2.4b weisen einander überlappende sowie aneinander anliegende flächige Profilbereiche auf, in denen sie mittels zuvor erläuterter Verklebung mit hier nicht eigens dargestellten Klebstofflagen unter Lagefixierung relativ zueinander durch die zusammenwirkenden Steckverbindungselemente 3, 4 an den Teilprofilen 2.1a, 2.1b, 2.2a, 2.2b, 2.3a, 2.3b, 2.4a, 2.4b miteinander verbunden sind.

Gemäß dem in Figur 17 gezeigten Beispiel wird hier aus mehreren einfach herstellbaren Teilprofilen 2.1a, 2.1b, 2.2a, 2.2b, 2.3a, 2.3b, 2.4a, 2.4b begrenzter Länge ein Verbundprofil 1 in Form eines Doppel-T-Profils gebildet, dessen Länge beliebig größer sein kann als die Länge der einzelnen Teilprofile 2.1a, 2.1b, 2.2a, 2.2b, 2.3a, 2.3b, 2.4a, 2.4b.

Zur Gewährleistung einer hohen Stabilität des so gebildeten Verbundprofils 1 sind die diversen Stoßstellen 8 zwischen den Teilprofilen 2.1a und 2.1b, zwischen den Teilprofilen 2.2a und 2.2b, zwischen den Teilprofilen 2.3a und 2.3b und zwischen den Teilprofilen 2.4a und 2.4b über die Länge des Verbundprofils 1 versetzt zueinander angeordnet.

Die hier zur Bildung des Verbundprofils 1 verwendeten Teilprofile 2.1a, 2.1b, 2.2a, 2.2b, 2.3a, 2.3b, 2.4a, 2.4b weisen aneinander anliegende flächige Profilbereiche auf, in denen sie mittels zuvor erläuterter Verklebung mit hier nicht eigens dargestellten Klebstofflagen unter Lagefixierung relativ zueinander durch die zusammenwirkenden Steckverbindungselemente 3, 4 an den Teilprofilen 2.1a, 2.1b, 2.2a, 2.2b, 2.3a, 2.3b, 2.4a, 2.4b miteinander verbunden sind.

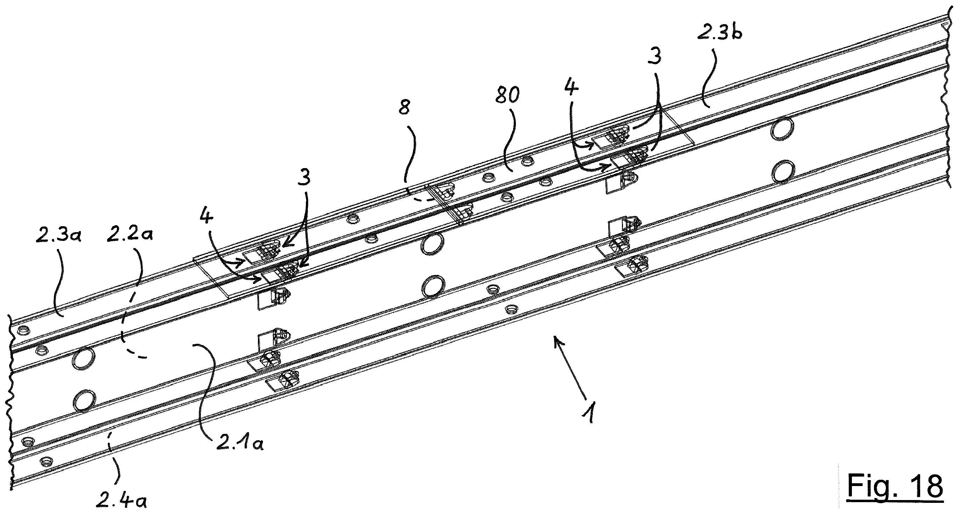

Figur 18 zeigt das Verbundprofil 1 aus Figur 17 in einer vergrößerten Teilansicht auf eine oberseitige Stoßstelle 8 des Verbundprofils 1. An dieser Stoßstelle 8 stoßen die zwei oberseitigen flachen Teilprofile 2.3a und 2.3b aneinander an. Um eine durch diese Stoßstelle 8 verursachte Schwächung des Verbundprofils 1 zu kompensieren, ist hier oberseitig auf dem Verbundprofil 1 ein die Stoßstelle 8 überbrückendes und überdeckendes, mit den einander zugewandten Endbereichen der beiden dort stoßenden Teilprofile 2.3a, 2.3b verbundenes Überbrückungs-Teilprofil 80 angebracht.

Auch das Anbringen des Überbrückungs-Teilprofils 80 an dem Teilprofilen 2.3a und 2.3b erfolgt mittels einer hier nicht sichtbaren, zwischen der Unterseite des Überbrückungs-Teilprofils 80 und dem von diesem überdeckten Bereich der Oberseite der Teilprofile 2.3a und 2.3b angeordneten Klebstofflage. Dabei erfolgt die Fixierung des Überbrückungs-Teilprofils 80 relativ zu den beiden Teilprofilen 2.3a und 2.3b mittels an diesen beteiligten Teilprofilen 2.3a, 2.3b und 80 vorgesehener, beim Anbringen des Überbrückungs-Teilprofils 80 in Halteeingriff miteinander tretender erster und zweiter Steckverbindungselemente 3, 4.

Analog zu der in Figur 18 gezeigten oberseitigen Stoßstelle 8 können auch an weiteren, in Figur 17 erkennbaren Stoßstellen 8 zwischen den weiteren miteinander stoßenden Teilprofilen 2.1a und 2.1b, 2.2a und 2.2b sowie 2.4a und 2.4b Überbrückungs-Teilprofile 80 angebracht werden.

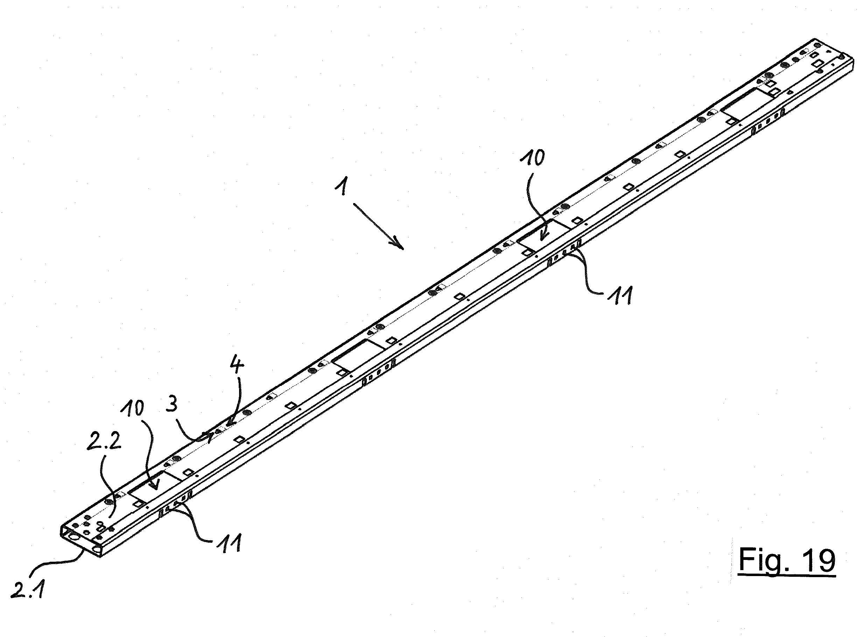

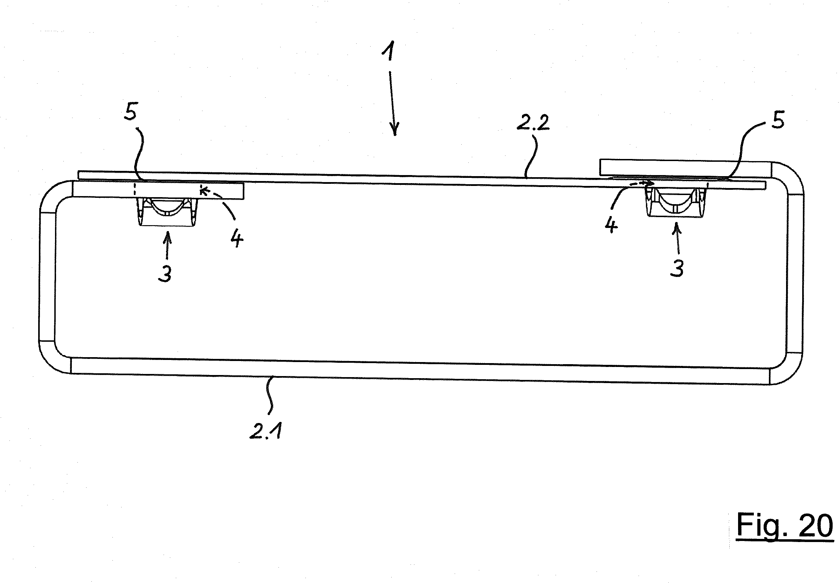

Die Figuren 19 und 20 zeigen ein Verbundprofil 1, gebildet aus zwei Teilprofilen 2.1, 2.2, das als Runge für einen LKW-Aufbau ausgeführt ist, in Ansicht schräg von oben sowie in Stirnansicht.

Im Verlauf dieses Verbundprofils 1 sind in der in Figur 19 oberen Flachseite mehrere, hier vier, rechteckige Ausnehmungen 10 im Abstand voneinander angebracht, neben welchen in der in Figur 19 rechten Schmalseite jeweils mehrere kleinere Durchbrechungen 11 angebracht sind. Die kleineren Durchbrechungen 11 dienen zum Hindurchführen von Schrauben oder von Gewindestiften von Scharnieren, mittels welchen eine Laderaumtür an dem hier eine Runge bildenden Verbundprofil 1 angebracht werden kann.

Die Ausnehmungen 10 dienen dazu, einen Zugang in das Innere des Verbundprofils 1 zu schaffen und mit einem Werkzeug Schrauben oder Muttern im Inneren des Verbundprofils 1 an den dorthin eingeführt Gegenstücken der Scharniere anbringen zu können. Die Ausnehmungen 10 können auch als Grifföffnungen, beispielsweise bei einem Besteigen des Laderaums eines Lastkraftwagens, genutzt werden.

Wie die Figur 20 veranschaulicht, besteht dieses Verbundprofil 1 aus einem vierfach rechtwinklig abgekanteten, im Querschnitt C-förmigen ersten Teilprofil 2.1 und einen damit verbundenen flachen, streifenförmigen zweiten Teilprofil 2.2. Dabei ist das zweite Teilprofil 2.2 mit einer deutlich geringeren Materialstärke ausgeführt als das erste Teilprofil 2.1, was für eine vorgesehene Belastung des als Runge dienenden Verbundprofils 1 ausreichend sein kann. Alternativ kann auch das zweite Teilprofil 2.2 mit einer Materialstärke entsprechend der Materialstärke des ersten Teilprofils 2.1 ausgeführt sein.

Die hier zur Bildung des Verbundprofils 1 verwendeten Teilprofile 2.1 und 2.2 weisen einander überlappende sowie aneinander anliegende flächige Profilbereiche auf, in denen sie mittels zuvor erläuterter Verklebung mit hier nicht eigens dargestellten Klebstofflagen unter Lagefixierung relativ zueinander durch die zusammenwirkenden Steckverbindungselemente 3, 4 an den Teilprofilen 2.1 - 2.4 miteinander verbunden sind.

An der in Figur 20 linken Seite des Verbundprofils 1 ist das dort sichtbare erste Steckverbindungselement 3 Teil des zweiten Teilprofils 2.2 und das zweite Steckverbindungselement 4 ist hier in dem ersten Teilprofil 2.1 vorgesehen. An der in Figur 20 rechten Seite des Verbundprofils 1 ist das dort sichtbare erste Steckverbindungselement 3 Teil des ersten Teilprofils 2.1 und das zweite Steckverbindungselement 4 ist hier in dem zweiten Teilprofil 2.2 vorgesehen. Es ist auch möglich, jeweils alle ersten Steckverbindungselemente 3 an dem einen der beiden Teilprofile 2.1, 2.2 und jeweils alle zweiten Steckverbindungselemente 4 an dem anderen der beiden Teilprofile 2.2, 2.1 anzuordnen.

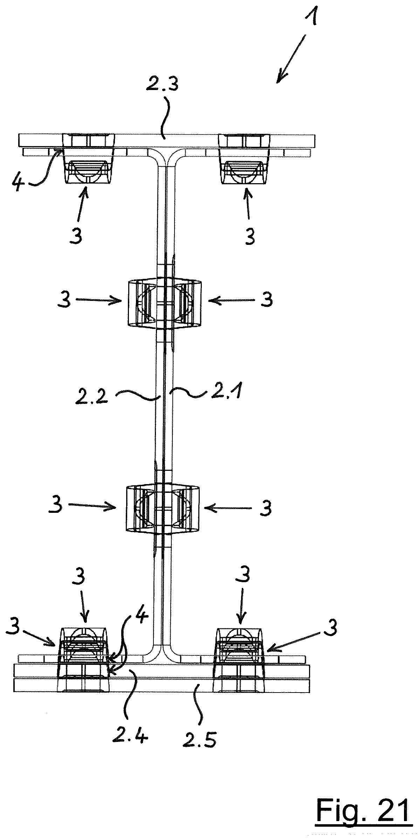

Figur 21 zeigt ein weiteres Verbundprofil 1 in Form eines Doppel-T-Profils, gebildet aus zwei C-förmigen Teilprofilen 2.1, 2.2 und drei flachen Teilprofilen 2.3, 2.4, 2.5, in einer Stirnansicht. Dieses Verbundprofil 1 stimmt weitgehend mit dem anhand der Figuren 9 und 10 beschriebenen Verbundprofil 1 überein. Unterschiedlich ist, dass bei dem Verbundprofil 1 gemäß Figur 21 in dessen unterem Teil nun zwei identische flache Teilprofile 2.4, 2.5 angebracht sind, wodurch ein besonders stabiler Untergurt geschaffen wird.

Dabei ist in Figur 21 weiter veranschaulicht, dass hier am untersten flachen Teilprofilen 2.5 die ersten Steckverbindungselemente 3 vorgesehen sind und dass darüber in dem oberen Teilprofil 2.4 der beiden unterseitigen Teilprofile 2.4, 2.5 sowie in den seitlichen unteren Schenkeln der beiden ersten C-förmigen Teilprofile 2.1, 2.2 die zweiten Steckverbindungselemente 4 angeordnet sind. Somit werden für das Verbinden der beiden unterseitigen flachen Teilprofile 2.4, 2.5 mit den beiden ersten Teilprofilen 2.1, 2.2 nur an dem untersten flachen Teilprofil 2.5 erste Steckverbindungselemente 3 benötigt.

Für dieses Ausführungsbeispiel erfolgt dann die anhand der Figur 1 erläuterte Formgebung des ersten Halteelements 3 in Form der Lasche oder Zunge 30 so, dass der Abstand zwischen dem Anlagebereich (Bezugsziffer 31 in Figur 1) des ersten Steckverbindungselements 3 und der benachbarten Oberfläche des zugehörigen Teilprofils, gemäß Figur 21 des Teilprofils 2.5, groß genug ist, um dazwischen die übereinander angeordneten Bereiche der zwei Teilprofile, gemäß Figur 21 der Teilprofile 2.1 bzw. 2.2 und 2.4 aufnehmen zu können.

Auch hier wird zum Verbinden der Teilprofile 2.1 - 2.5 zwischen deren aneinander anliegenden Flächenbereichen jeweils eine Klebstofflage angeordnet, zu deren Aushärtung die Teilprofile 2.1 - 2.5 mittels der diversen daran vorgesehenen ersten und zweiten Steckverbindungselemente 3, 4 relativ zueinander in ihrer Lage festgelegt werden.

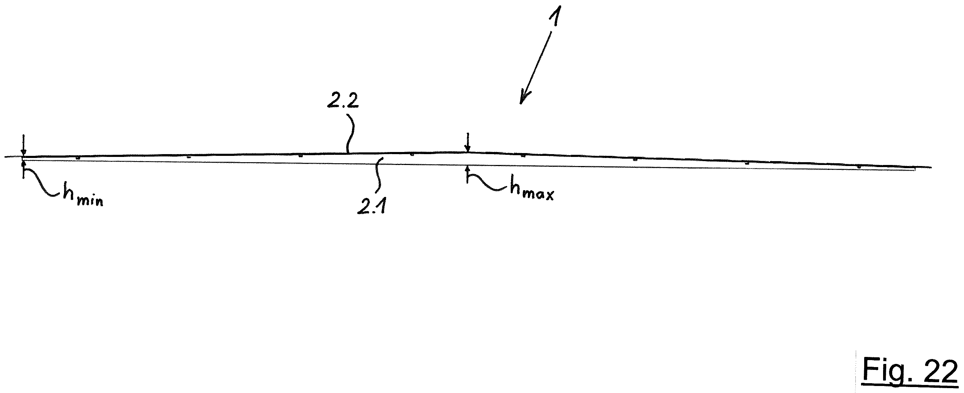

Figur 22 zeigt ein Verbundprofil 1 mit einer über seine Länge zwischen einem Maß hₘᵢₙ an seinen Enden und einem Maß hₘₐₓ in seiner Längsmitte variierenden Profilhöhe h, in Seitenansicht. Es ist auch möglich, das Verbundprofil 1 so herzustellen, dass es an einem ersten Ende eine minimale Höhe hₘᵢₙ und an einem zweiten Ende eine maximale Höhe hₘₐₓ aufweist.

Dieses Verbundprofil 1 wird dadurch gebildet, dass wenigstens eines der im Querschnitt gesehen abgewinkelten Teilprofile des Verbundprofils 1 mit nicht zueinander parallel verlaufenden Biegekanten hergestellt wird.

Hiermit wird ein Verbundprofil 1 geschaffen, welches eine über seine Längserstreckung gesehen unterschiedliche Belastbarkeiten bietet, was eine Anpassung an in bestimmten Anwendungsfällen auftretende ortsabhängig unterschiedliche Belastungen ermöglicht, um über ihre gesamte Länge gleichbleibend hohe und demzufolge schwerere Profile zu ersetzen.

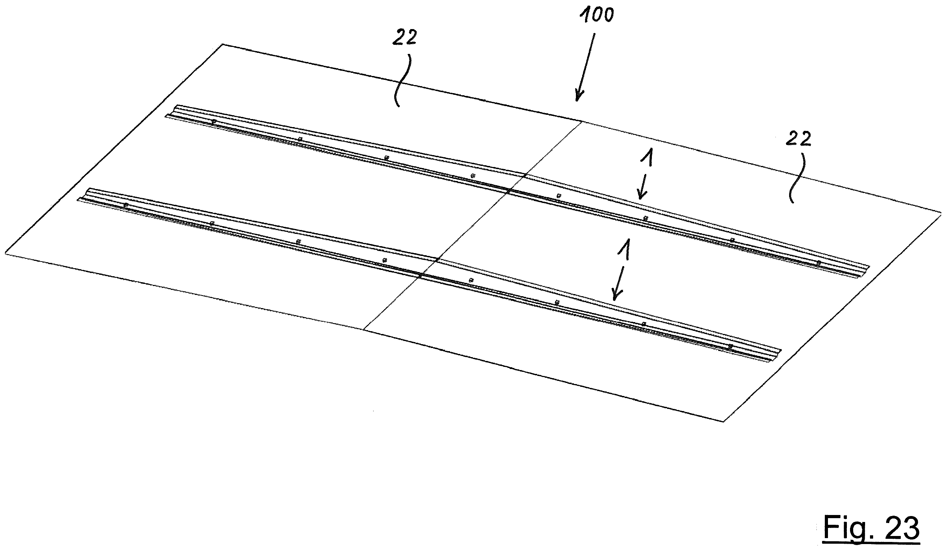

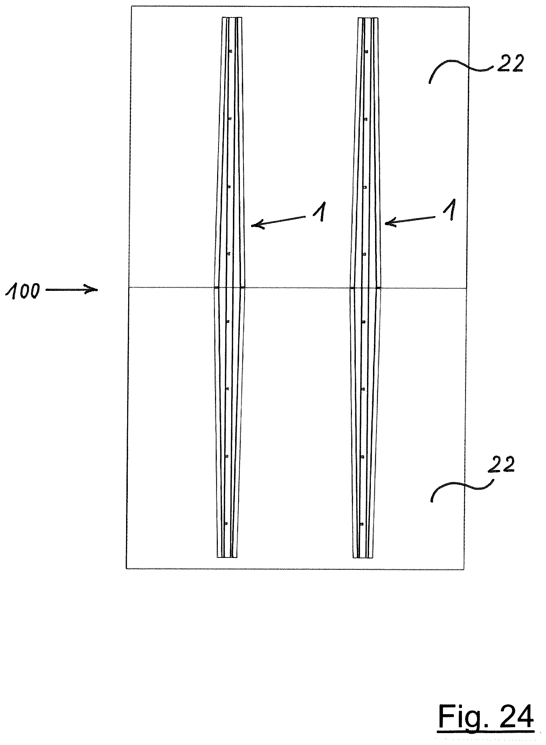

Die Figuren 23 und 24 zeigen ein aus zwei jeweils durchgehenden Verbundprofilen 1 nach Figur 22 und einem hier in Figur 23 "durchsichtig" dargestellten flächigen Element 22 gebildetes Verbundbauteil 100 mit zwei um einen geringen Winkel gegeneinander geneigten Teilflächen des flächigen Elements 22. Die Teilprofile, die hier die beiden Verbundprofile 1 bilden, werden in der zuvor erläuterten Art und Weise miteinander verklebt und relativ zueinander in ihrer Lage festgelegt. Das flächige Element 22 wird zweckmäßig ebenfalls mit den beiden Verbundprofilen 1 verklebt, wobei auch hier an den Verbundprofilen 1 und dem von diesem getragenen flächigen Element 22 zusammenwirkende erste und zweite Steckverbindungselemente, die hier nicht dargestellt sind, vorgesehen sein können.

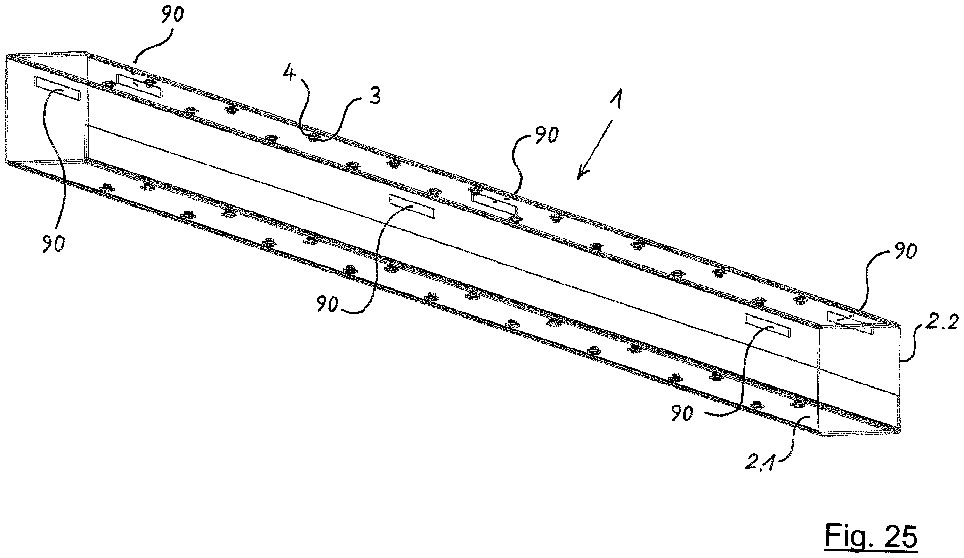

Figur 25 zeigt ein aus zwei Teilprofilen 2.1, 2.2 gebildetes Verbundprofil 1 in Form eines Rechteck-Hohlprofils, in Ansicht schräg von oben.

Oberseitig und unterseitig sind an den das Verbundprofil 1 bildenden Teilprofilen 2.1, 2.2 erste und zweite zusammenwirkende Steckverbindungselemente 3, 4 angeordnet.

Außerdem ist dieses Verbundprofil 1 mit in Abständen angebrachten seitlichen Ausnehmungen 90 versehen, deren Funktion weiter unten noch erläutert wird.

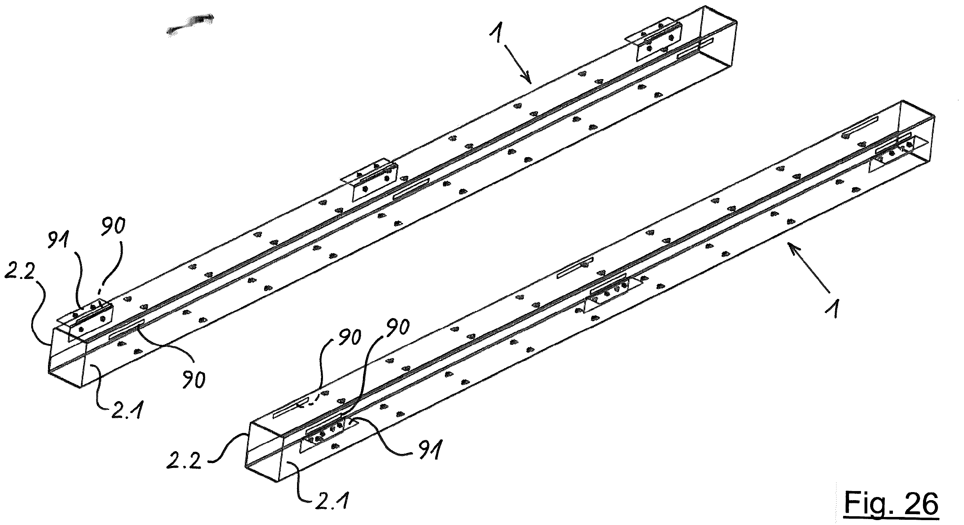

Figur 26 zeigt zwei parallel zueinander angeordnete Verbundprofile 1 gemäß Figur 25, mit jeweils bündig unter den Ausnehmungen 90 angebrachten Übergangswinkeln 91, in Ansicht schräg von oben.

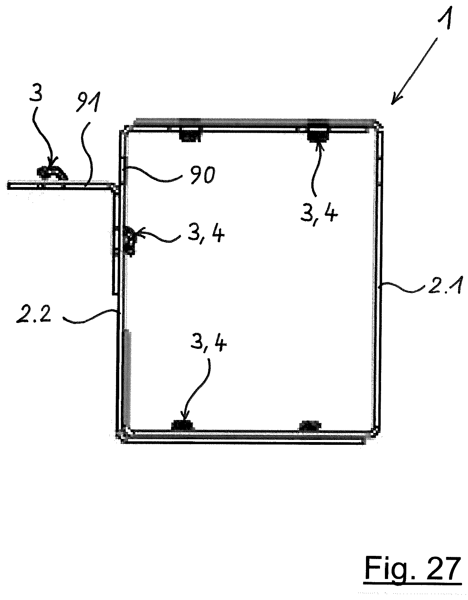

Figur 27 zeigt das in Figur 26 linke Verbundprofil 1 in einer vergrößerten Stirnansicht. Das erste Teilprofil 2.1 dieses Verbundprofils 1 hat in Stirnansicht etwa eine G-Form, während das zweite Teilprofil 2.2 in der Stirnansicht C-förmig ist. In ihren oberen und unteren einander überlappenden Flächenbereichen sind diese zwei Teilprofile 2.1, 2.2 miteinander verklebt und mittels der dort angeordneten, zusammenwirkenden ersten und zweiten Steckverbindungselemente 3, 4 in ihrer Lage relativ zueinander festgelegt.

An der in Figur 27 linken, vertikalen Wand des Verbundprofils 1, konkret an der linken Wand von dessen zweitem Teilprofil 2.2, ist unmittelbar bündig unterhalb der Ausnehmung 90 einer der Übergangswinkel 91 sichtbar. Der Übergangswinkel 91 besitzt sowohl an seiner an dem zweiten Teilprofil 2.2 anliegenden Innenfläche als auch an seiner vom übrigen Verbundprofil 1 abragenden Fläche erste Steckverbindungselemente 3. Mittels des an seinem nach unten weisenden Schenkel angeordneten ersten Steckverbindungselements 3 ist der Übergangswinkel 91 mittels des damit zusammenwirkenden zweitem Steckverbindungselements 4 in der seitlichen Wand des zweiten Teilprofils 2.2 relativ zu diesem unter Zwischenlage einer weiteren, nicht dargestellten Klebstofflage in seiner Position festgelegt und mit dem übrigen Verbundprofil 1 verbunden.

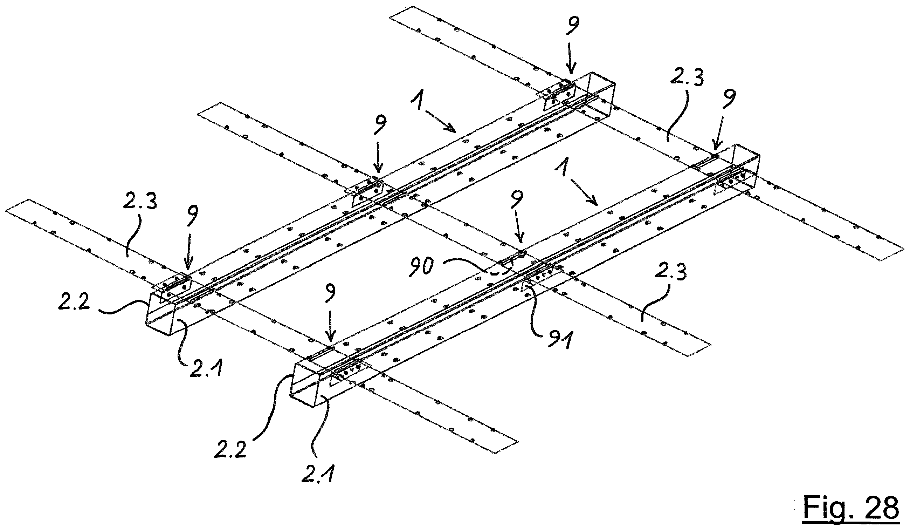

Figur 28 zeigt die zwei Verbundprofile 1 aus Figur 26 mit drei die Verbundprofile rechtwinklig kreuzend durchsetzenden, zueinander parallelen, dritten Teilprofilen 2.3, in Ansicht schräg von oben. Die dritten Teilprofile 2.3 werden, um die Anordnung gemäß Figur 28 herzustellen, in ihrer Längsrichtung durch die miteinander fluchtenden Ausnehmungen 90 in den parallelen Verbundprofilen 1 geschoben, bis sie die in Figur 28 gezeigte Lage erreicht haben. In dieser Lage werden die dritten Teilprofile 2.3 im Bereich der Übergangswinkel 91 mit diesen verklebt und mittels dort angeordneter, zusammenwirkender Steckverbindungselemente 3, 4 in ihrer Lage relativ zu den Verbundprofilen 1 festgelegt.

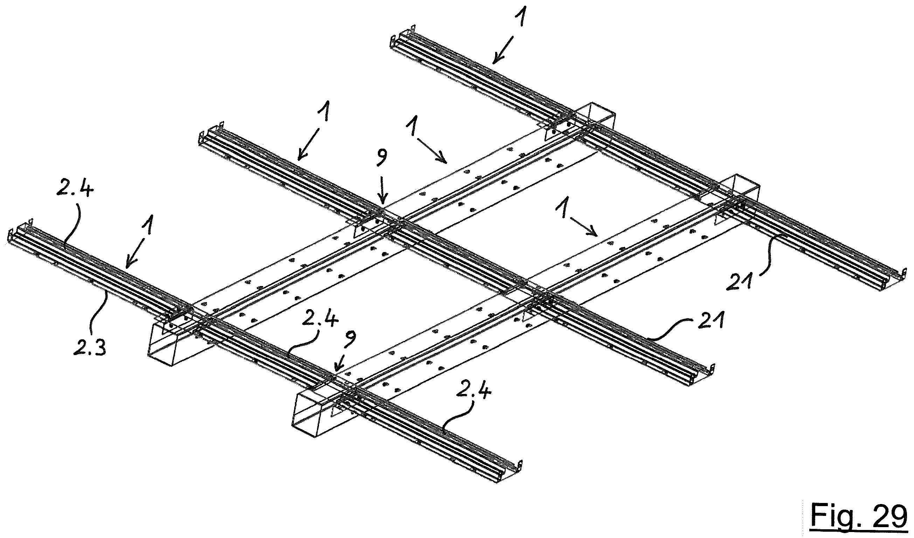

Figur 29 zeigt die Profilanordnung aus Figur 28 mit zusätzlich auf den kreuzenden Teilprofilen 2.3 angebrachten weiteren Teilprofilen 2.4, in Ansicht schräg von oben. Auf jedem Teilprofil 2.3 sind drei einzelne weitere Teilprofile 2.4 angebracht, die jeweils eine geringere Länge haben und stumpf an den quer dazu verlaufenden, primären Rechteck-Verbundprofilen 1 enden. Die Teilprofile 2.3, 2.4 sind in der oben schon beschriebenen Art und Weise miteinander verklebt und mittels zusammenwirkender, in Figur 29 nicht bezifferter Steckverbindungs-elemente lagefixiert und bilden nun sekundäre Verbundprofile 1.

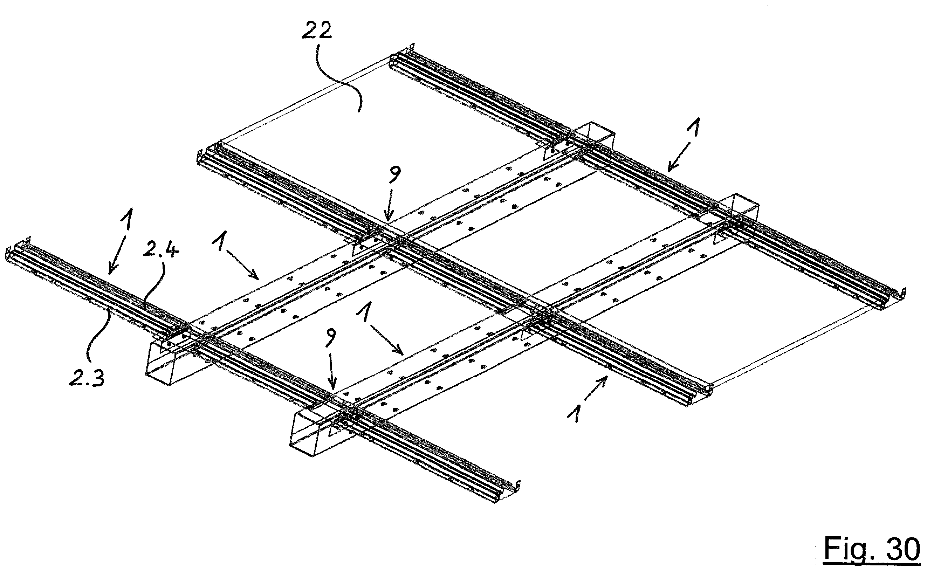

Figur 30 zeigt die aus den primären und sekundären, einander an Profilkreuzungsstellen 9 kreuzenden Verbundprofilen 1 gebildete Profilanordnung aus Figur 29, nun mit einem darauf angebrachten flächigen Element 22, in Ansicht schräg von oben. Das flächige Element 23 liegt dabei mit seinen Längsrändern auf zwei einander benachbarten sekundären Verbundprofilen 1 auf.

Durch Anbringen eines weiteren flächigen Elements zwischen den beiden in Figur 30 linken, einander benachbarten sekundären Verbundprofilen 1 kann beispielsweise ein stabiles, eine geschlossene Fläche bilden des Boden- oder Wandelement als Verbundbauteil gebildet werden.

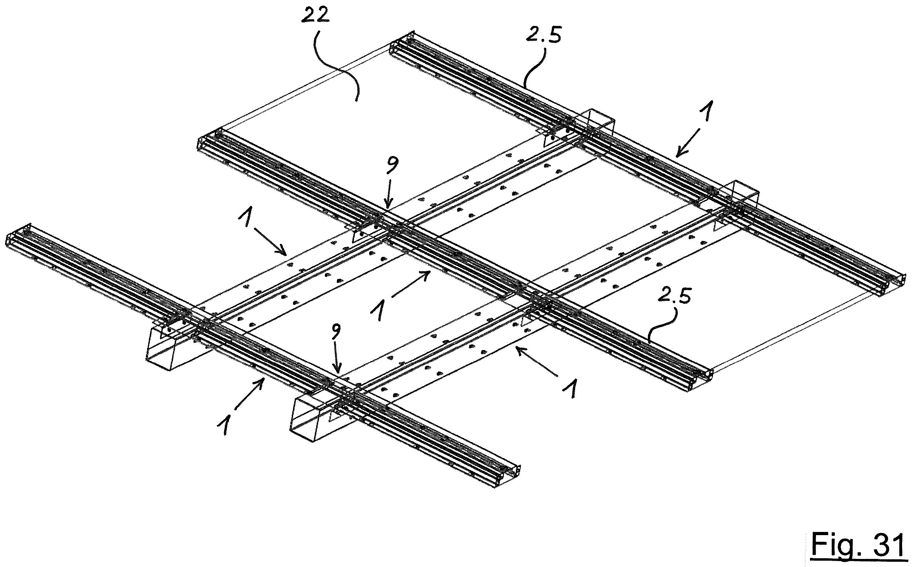

Figur 31 zeigt die Anordnung aus Figur 30, nun mit auf den sekundären Verbundprofilen 1 angebrachten, die Längsränder des flächigen Elements 21 überdeckenden weiteren Teilprofilen 2.5, wieder in Ansicht schräg von oben. Diese weiteren Teilprofile 2.5 dienen zur Festlegung des flächigen Elements 22, damit dieses sich nicht mehr selbsttätig von der tragenden Profilanordnung lösen kann.

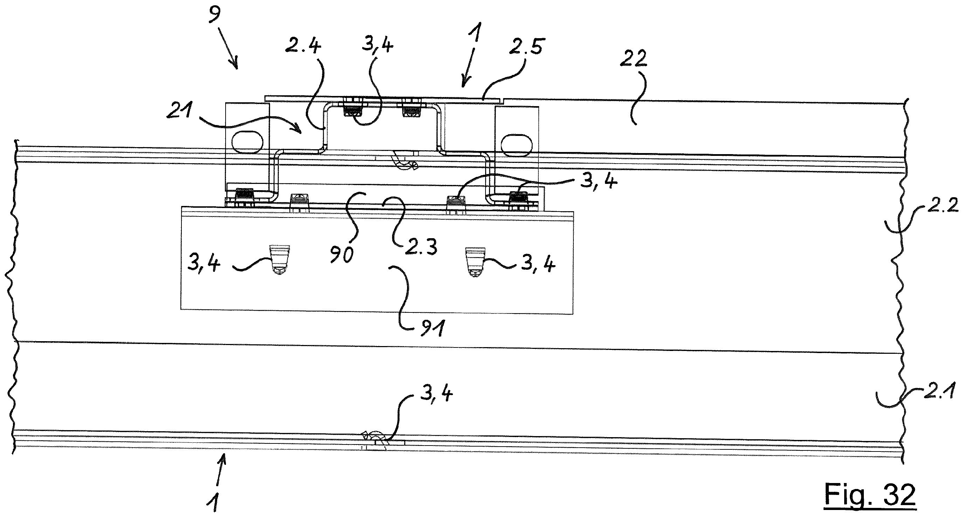

Figur 32 zeigt eine Profilkreuzungsstelle 9 der Anordnung aus Figur 31 in einer vergrößerten Seitenansicht. In der Zeichnungsebene verläuft eines der primären, aus den ersten beiden Teilprofilen 2.1, 2.2 gebildeten Verbundprofile 1. Senkrecht zur Zeichnungsebene verläuft eines der sekundären Verbundprofile 1, welches das primäre Verbundprofil 1 durchsetzt. Dabei veranschaulicht die Figur 32, dass die Gesamthöhe der Profilanordnung aus den einander kreuzenden primären und sekundären Verbundprofilen 1 eine Gesamthöhe aufweist, die kleiner ist als die addierten Höhen von primärem und sekundärem Verbundprofil 1.

Weiterhin veranschaulicht die Figur 32, dass das oben angeordnete, sekundäre Verbundprofil 1 aus drei Teilprofilen 2.3, 2.4 und 2 5 zusammengesetzt ist.

Das Teilprofil 2.3 ist ein flaches Profil, welches mit der Oberseite des am primären Verbundprofil 1 angebrachten Übergangswinkels 91 verklebt und über erste und zweite Steckverbindungselemente 3, 4 lagefixiert ist und sich durch die Ausnehmungen 90 in den Seitenflächen des primären Verbundprofils 1 hindurch erstreckt.

Auf dem Teilprofil 2.3 ist das hier im Querschnitt gesehen treppenförmige weitere Teilprofil 2.4 durch Verklebung unter Lagefixierung durch die dort zusammenwirkenden Steckverbindungselemente 3, 4 angebracht.

Nach oben hin ist das sekundäre Verbundprofil 1 durch ein weiteres flaches, mit der Oberseite des Teilprofils 2.4 wieder durch Verklebung unter Lagefixierung durch dort angeordnete Steckverbindungselemente 3, 4 verbundenes Teilprofil 2.5, welches den oberen Bereich des Teilprofils 2.4 seitlich überragt, abgeschlossen.

Zwischen den Teilprofilen 2.4 und 2.5 wird links und rechts vom oberen Teil des Teilprofils 2.4 jeweils eine nutförmige Aufnahme 21 für einen Randbereich des flächigen Elements 22 gebildet. Rechts in Figur 32 ist bereits das flächige Element 22 angeordnet und an seinem nach links weisenden Randbereich am sekundären Verbundprofil 1 gehalten. Links in Figur 32 fehlt das flächige Element 22 noch.

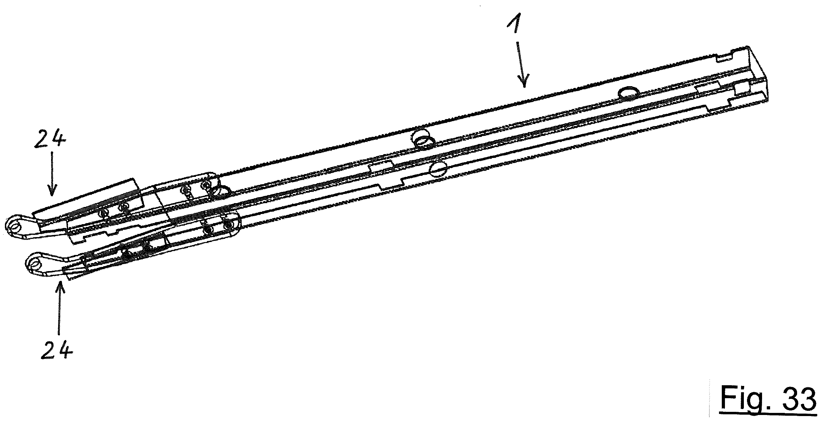

Figur 33 zeigt ein Verbundprofil 1 mit zwei endseitig daran angebrachten, parallel zueinander ausgerichteten Scharnierelementen 24, in Ansicht schräg von oben.

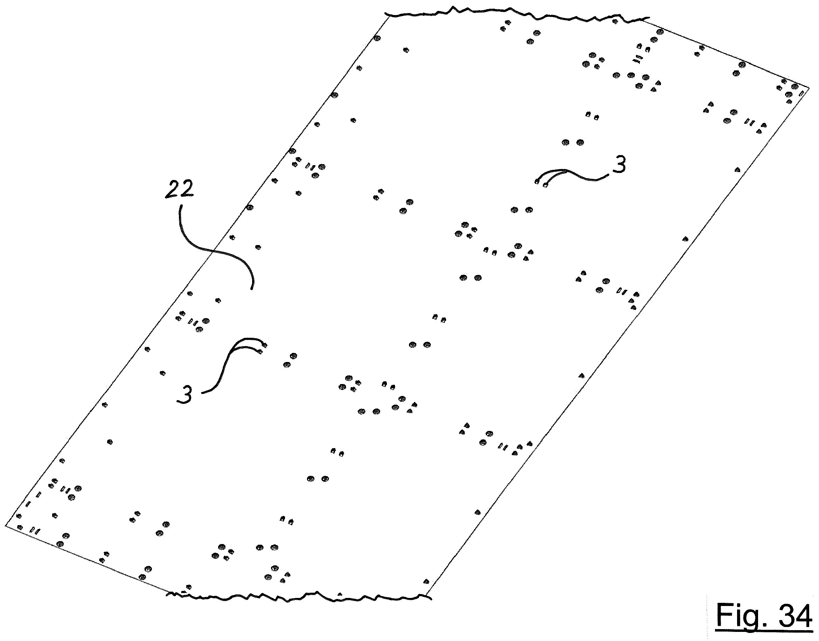

Figur 34 zeigt ein flächiges Element 22, beispielsweise eine Blech- oder Kunststoffplatte, mit Steckverbindungselementen 3, als Teil des nachfolgend noch weiter zu erläuternden Profilsystems, in Ansicht schräg von oben.

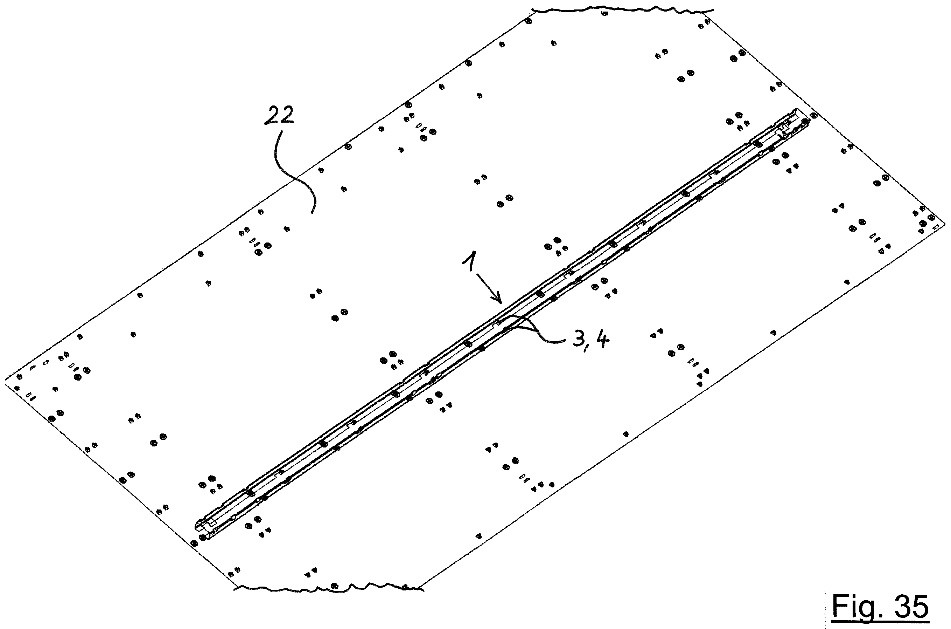

Figur 35 zeigt das flächige Element 22 aus Figur 34 mit einem ersten daran angebrachten, in Elementlängsrichtung verlaufenden Teilprofil oder Verbundprofil 1, in Ansicht schräg von oben. Dabei erfolgt auch hier wieder das Verbinden durch Verkleben und Fixierung der Relativlage zueinander mittels Steckverbindungselementen 3, 4.

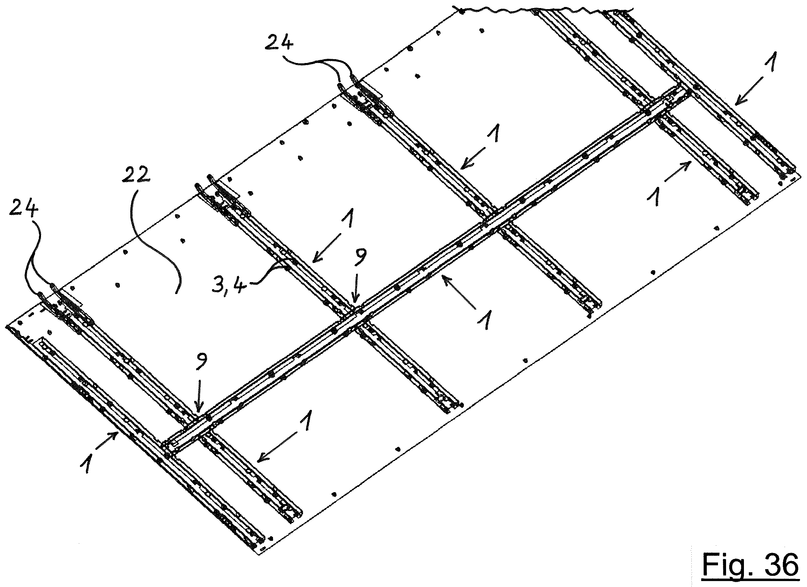

Figur 36 zeigt das flächige Element 22 aus Figur 34 und 35 mit weiteren daran in gleicher Weise angebrachten, in Längs- und Querrichtung des flächigen Elements 22 verlaufenden Teilprofilen oder Verbundprofilen 1, in Ansicht schräg von oben. Die längs und quer verlaufenden Teilprofile oder Verbundprofile 1 kreuzen sich an Profilkreuzungsstellen 9. Einige der Teilprofile oder Verbundprofile 1, die in Querrichtung des flächigen Elements 22 verlaufen, sind entsprechend der Figur 33 ausgeführt und weisen endseitig Scharnierelemente 24 auf.

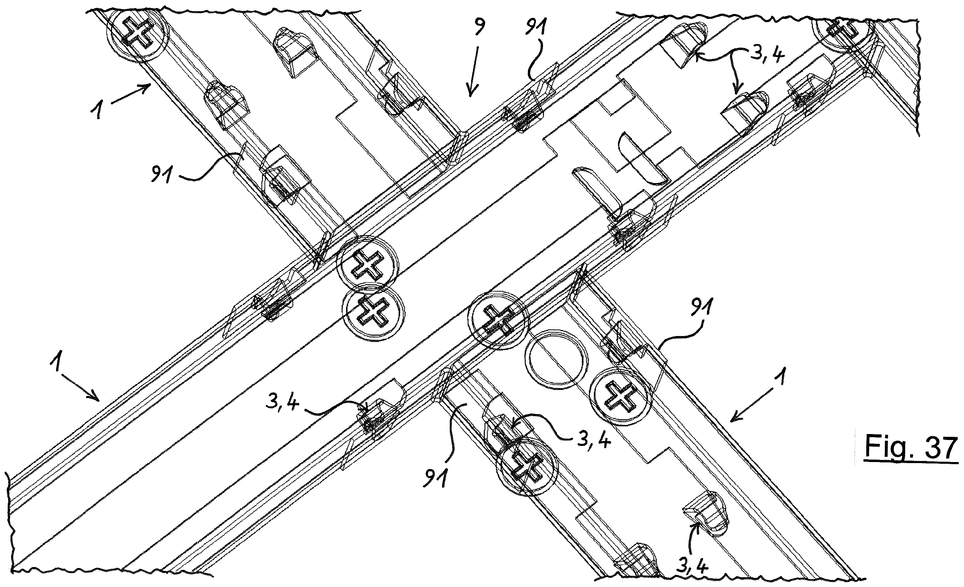

Figur 37 zeigt eine Profilkreuzungsstelle 9 der Anordnung aus Figur 36 in einer vergrößerten Ansicht schräg von oben. Das in Figur 37 von links unten nach rechts oben in Längsrichtung des flächigen Elements 22 verlaufende Verbundprofil 1 ist ein an der Profilkreuzungsstelle 9 durchlaufendes Profil. Zwei weitere Verbundprofile 1 verlaufen rechtwinklig zum ersten Verbundprofil 1 in Querrichtung des flächigen Elements 22 und enden stumpf an den Seitenflächen des ersten, in Elementlängsrichtung verlaufenden Verbundprofils 1.

Um alle an der Profilkreuzungsstelle 9 in der gleichen Ebene liegenden Verbundprofile 1 miteinander ausreichend stabil zu verbinden, ist in allen vier zwischen den Seitenflächen der Verbundprofile 1 gebildeten Ecken jeweils ein Übergangswinkel 91 angebracht. Die Verbindung zwischen jeweils einem Übergangswinkel 91 und den zwei zugehörigen Verbundprofilen 1 erfolgt wieder durch Verklebung sowie Lagefixierung mittels dort an den Verbundprofilen 1 und den Übergangswinkeln 91 angeordneter, zusammenwirkender erster und zweiter Steckverbindungselemente 3, 4.

Dabei sind hier die Steckverbindungselemente 3, 4 an den Verbundprofilen 1 und den Übergangswinkeln 91 so ausgerichtet, dass die Übergangswinkel 91 in einer Richtung senkrecht zu der Ebene des aus den Verbundprofilen gebildeten Profilgitters angebracht werden können.

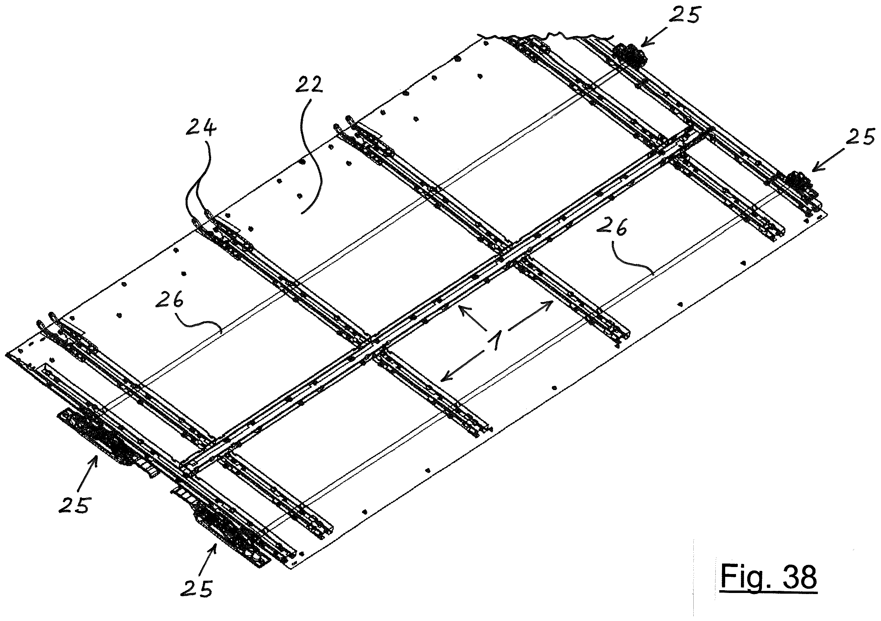

Figur 38 zeigt in Ansicht schräg von oben die Anordnung aus Figur 36, nun mit daran angebrachten unteren und oberen Riegelelementen 25 und diese verbindenden Verriegelungsstangen 26.

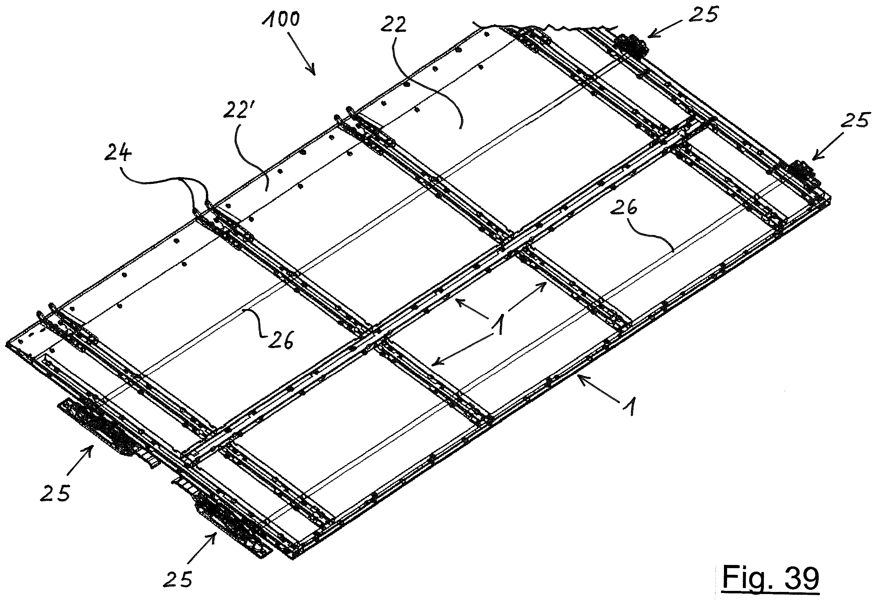

Figur 39 zeigt, wieder in Ansicht schräg von oben, ein nach Anbringen von randseitigen Teilprofilen oder Verbundprofilen 1 sowie eines streifenförmigen flächigen Elements 22' an den Längsrändern des flächigen Elements 22 vervollständigtes Verbundbauteil 100, hier in Form einer Tür eines Kofferaufbaus eines Lastkraftwagens.

Das so hergestellte Verbundbauteil 100 in Form einer Tür kann beispielsweise mit weiteren, an einer Runge gemäß Figur 19 und 20 als Teil eines Kofferaufbaus angeordneten Scharnierelementen schwenkbar verbunden werden.

Auch weitere Teile eines Nutzfahrzeugaufbaus lassen sich in der vorstehend beschriebenen Art und Weise aus dem beschriebenen Profilsystems mit hoher Maßgenauigkeit und Wirtschaftlichkeit fertigen, vorzugweise in Form von noch gut handhabbaren, miteinander zu verbindenden Wand- oder Boden- oder Deckensegmenten.

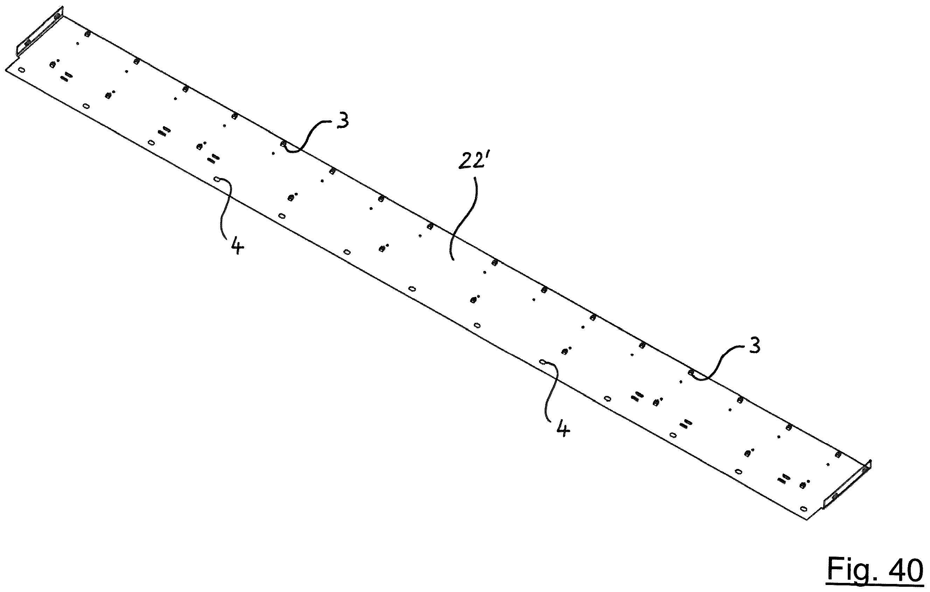

Figur 40 zeigt ein länglich-rechteckiges flächiges Element 22' mit Steckverbindungselementen 3, 4, als Teil des Profilsystems, in Ansicht schräg von oben.

Die ersten und zweiten Steckverbindungselemente 3, 4 sind in einem bestimmten Raster angeordnet, um dieses flächige Element 22' möglichst vielfältig mit anderen Elementen oder Profilen mit in einem korrespondierenden Raster angeordneten Steckverbindungselementen 3, 4 des Profilsystems kombinieren zu können.

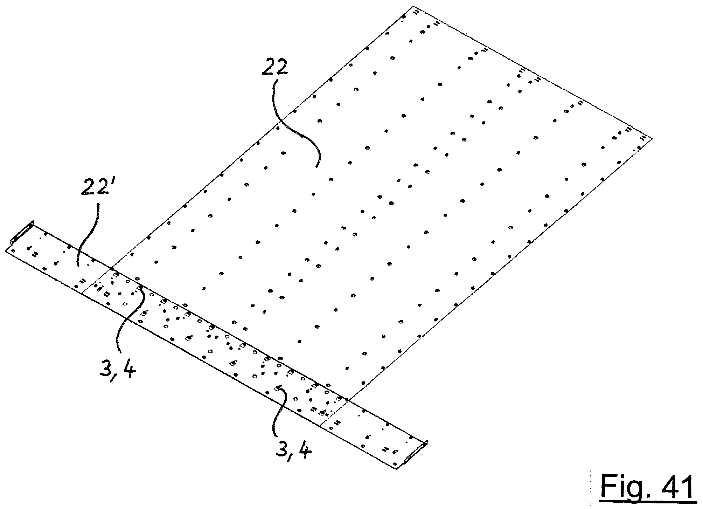

Figur 41 zeigt in Ansicht schräg von oben das flächige Element 22' aus Figur 40 in einem mit einem weiteren, ebenfalls Steckverbindungselemente 3, 4 aufweisenden, größeren rechteckigen flächigen Element 22 verbundenen Zustand.

Dabei sind auch diese flächigen Elemente 22, 22' miteinander mittels einer zwischenliegenden Klebstofflage verklebt und durch die zusammenwirkenden Steckverbindungselemente 3, 4 in ihrer Relativlage zueinander festgelegt, so dass auch hier während des Aushärtens des Klebstoffs sich die beiden flächigen Elemente 22, 22' nicht relativ zueinander bewegen können.

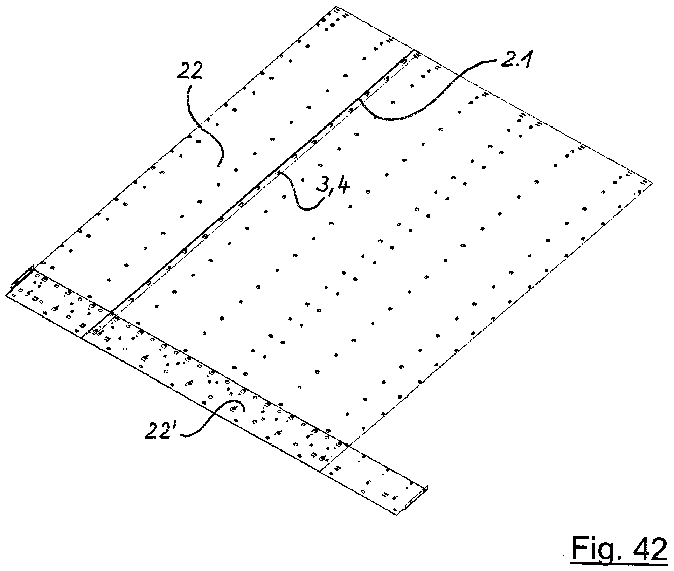

Figur 42 zeigt, wieder in Ansicht schräg von oben, die Anordnung aus Figur 41, nun zusammen mit einem damit in der vorstehend beschriebenen Art und Weise verbundenen, sich über beide flächigen Elemente 22, 22' erstreckenden ersten Teilprofil 2.1.

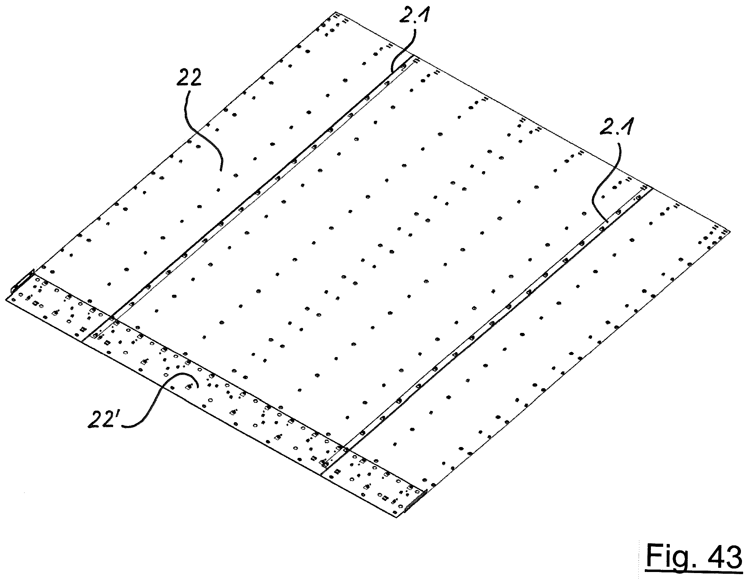

Figur 43 zeigt, ebenfalls in Ansicht schräg von oben, die Anordnung aus Figur 42, nun zusammen mit einem weiteren damit verbundenen, sich ebenfalls über beide flächigen Elemente 22, 22' erstreckenden weiteren ersten Teilprofil 2.1, das parallel zu dem zuerst angebrachten Teilprofil 2.1 verläuft.

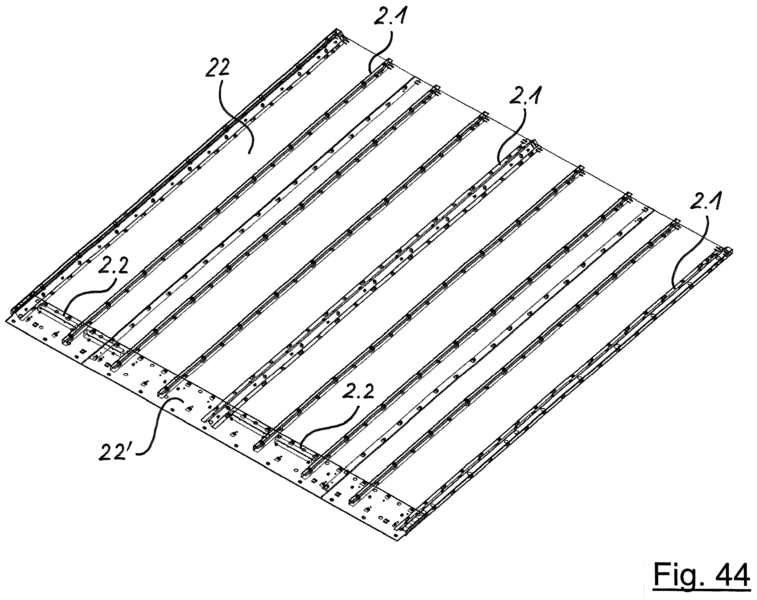

Figur 44 zeigt, wieder in Ansicht schräg von oben, die Anordnung aus Figur 43, nun zusammen mit mehreren weiteren damit verbundenen, sich parallel zueinander über beide flächigen Elemente 22, 22' erstreckenden ersten Teilprofilen 2.1 und quer dazu zwischen diesen verlaufenden zweiten Teilprofilen 2.2. Dabei weisen die zweiten Teilprofile 2.2 jeweils eine dem Abstand zweier einander benachbarter erster Teilprofile 2.1 entsprechende Länge auf.

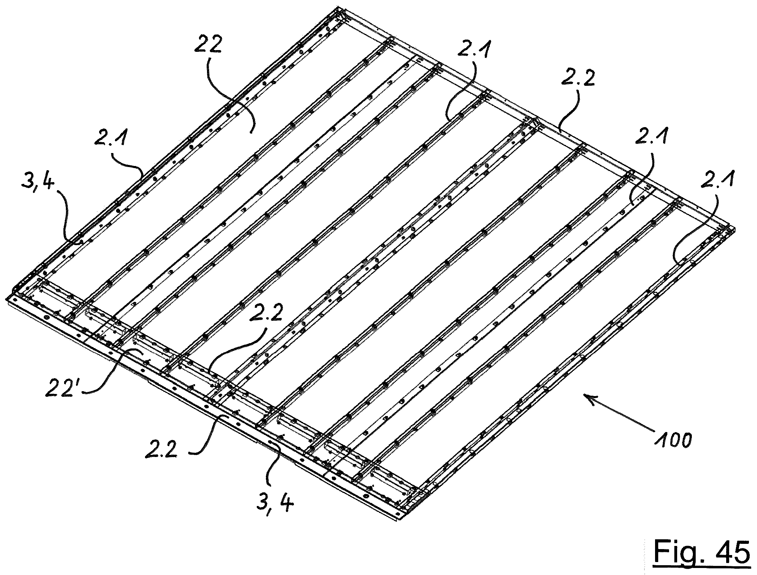

Figur 45 zeigt ein nach Anbringen von randseitigen Teilprofilen 2.2 an zwei einander gegenüberliegenden Rändern der flächigen Elemente 22, 22' vervollständigtes Verbundbauteil 100, hier in Form eines Boden- oder Wand- oder Deckensegments eines Nutzfahrzeugaufbaus oder eines Transportbehälters oder eines Gebäudes, ebenfalls in Ansicht schräg von oben.

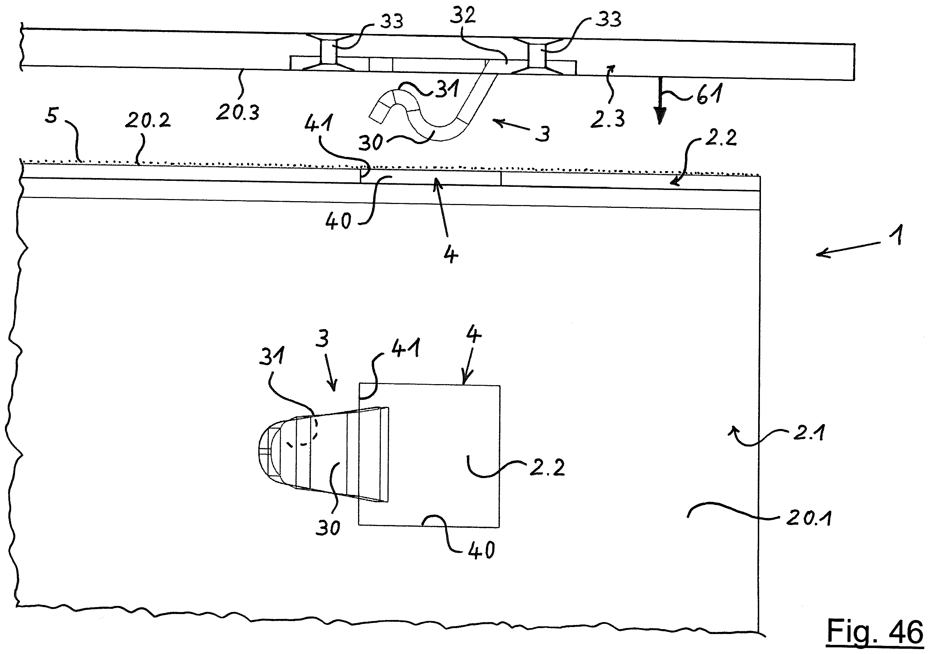

Figur 46 der Zeichnung zeigt, in Abwandlung des in Figur 1 dargestellten Ausführungsbeispiels, in Seitenansicht je einen Abschnitt von drei Teilprofilen 2.1, 2.2, 2.3, von denen die zwei Teilprofile 2.1, 2.2 bereits miteinander verbunden sind und mit denen ein drittes Teilprofil 2.2 noch zu verbinden ist, um ein Verbundprofil zu bilden.

Die Teilprofile 2.1 und 2.2 sind hier zwei deckungsgleich miteinander verbundene Winkelprofile mit relativ geringer Materialstärke und bestehen beispielsweise aus Metallblech, wie Stahlblech.

Das dritte, oben in Figur 46 zu sehende Teilprofil 2.3 ist hier ein flaches Profil mit größerer Materialstärke und besteht hier aus einem nichtmetallischen Material, wie z. B. Holz oder Kunststoff. Aufgrund dieser Eigenschaften ist es technisch nicht möglich, die die ersten Steckverbindungselemente 3 bildenden Laschen oder Zungen 30 einstückig mit dem Teilprofil 2.3 aus dessen Fläche herauszuformen. Um dennoch das Teilprofil 2.3 mit anderen Teilprofilen 2.1, 2.2 auf die vorstehend beschriebene Art und Weise verbinden zu können, sind die Steckverbindungselemente 3 hier als separate, zweckmäßig metallische, Bauteile mit der Fläche 20.3 des Teilprofils 2.3 verbunden. Zu diesem Zweck sind bei dem Ausführungsbeispiel nach Figur 46 einzelne Steckverbindungselemente 3 in Abständen an dem Teilprofil 2.3 angebracht, hier mittels Nieten 33. In dem in Figur 46 dargestellten Ausschnitt des Verbundprofils 1 ist nur ein Steckverbindungselement 3 sichtbar; weitere gleiche Steckverbindungselemente 3 sind in dem sich in Figur 46 nach links ersteckenden weiteren Teil des Verbundprofils 1 an dem Teilprofil 2.3 angebracht.

Damit die der Verklebung dienende Fläche 20.3 des Teilprofils 2.3 durch die Steckverbindungselemente 3 nicht in ihrer Ebenflächigkeit gestört wird, sind die Steckverbindungselemente 3 jeweils mit einer flachen Grundplatte 32 ausgeführt, aus der die Lasche oder Zunge 30 einstückig herausgeformt ist, und ist die Grundplatte 32 flächenbündig in die Fläche 20.3 des Teilprofils 2.3 eingelassen.

Das Verbinden des Teilprofils 2.3 mit den anderen Teilprofilen 2.1, 2.2 erfolgt dann in vollkommen identischer Art und Weise wie bei dem anhand der Figuren 1 bis 3 erläuterten Ausführungsbeispiel, auf deren Beschreibung diesbezüglich verwiesen wird.

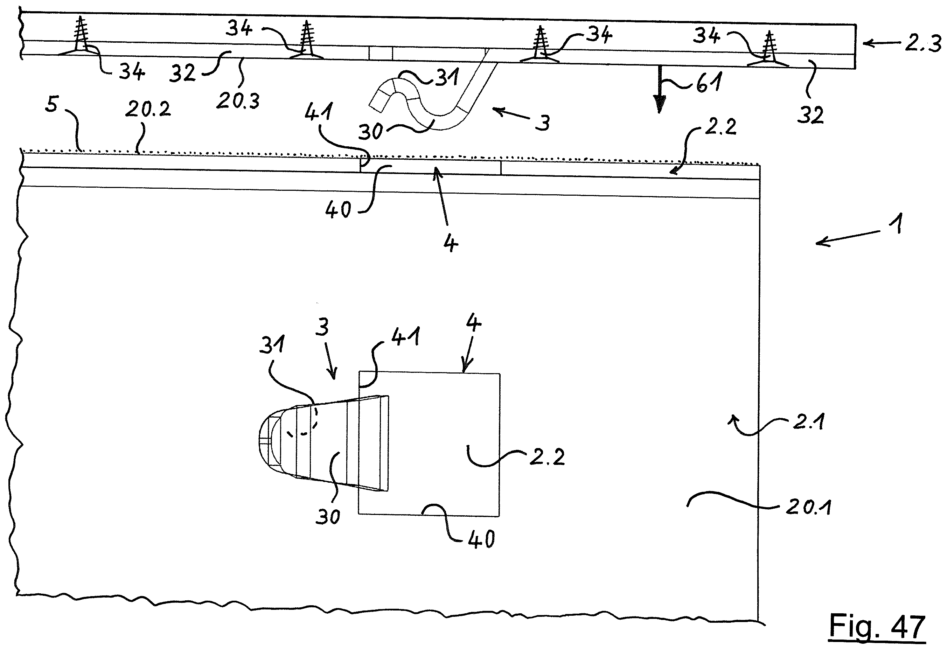

Das Ausführungsbeispiel gemäß Figur 47 schließlich zeigt in gleicher Darstellungsweise wie die Figur 46 ein nochmals abgeändertes Ausführungsbeispiel der Erfindung. Das Teilprofil 2.3 ist auch hier ein flaches Profil mit größerer Materialstärke und besteht aus einem nichtmetallischen Material, wie z. B. Holz oder Kunststoff. Der Unterschied zum Ausführungsbeispiel nach Figur 46 besteht darin, dass bei dem Ausführungsbeispiel nach Figur 47 nicht einzelne Steckverbindungselemente 3 jeweils für sich mit dem Teilprofil 2.3 verbunden sind, sondern mehrere Steckverbindungselemente 3 zusammengefasst an einer längeren, profilartigen Grundplatte 32 angeordnet sind, die mit dem Teilprofil 2.3 verbunden ist. In dem in Figur 47 dargestellten Ausschnitt des Verbundprofils 1 ist nur ein Steckverbindungselement 3 sichtbar; weitere gleiche Steckverbindungselemente 3 sind in dem sich in Figur 46 nach links ersteckenden weiteren Teil des Verbundprofils 1 an der mit dem Teilprofil 2.3 verbundenen, profilartigen Grundplatte 32 vorgesehen.

Die profilartige Grundplatte 32 besteht zweckmäßig aus Metall, wie Stahlblech, und die einzelnen Laschen oder Zungen 30 sind, z. B. durch einen Stanzvorgang, aus der Fläche der profilartigen Grundplatte 32 einstückig herausgeformt. Zur Erzielung einer im zusammengebauten Zustand des Verbundprofils 1 unsichtbaren Verbindung zwischen der Grundplatte 32 mit den Laschen oder Zungen 30 einerseits und dem übrigen Teilprofil 2.3 andererseits, sind diese miteinander durch Schrauben 34 verbunden, die von der Seite der Grundplatte 32 her durch darin vorgesehene Löcher in das Teilprofil 2.3 eingeschraubt sind.

Die profilartige Grundplatte 32 kann eine Flächengröße aufweisen, die mit der Flächengröße des übrigen Teilprofils 2.3 übereinstimmt, sodass dann die Unterseite der Grundplatte 32 die zur Verklebung des Teilprofils 2.3 mit den beiden weiteren Teilprofilen 2.1, 2.2 dienende Fläche 20.3 bildet.

Die profilartige Grundplatte 32 kann alternativ auch eine Flächengröße aufweisen, die kleiner ist als die Flächengröße des übrigen Teilprofils 2.3. In diesem Fall ist dann zweckmäßig die Grundplatte 32 flächenbündig in das übrige Teilprofil 2.3 eingelassen, um eine ebenflächige Unterseite des Teilprofils 2.3 insgesamt zu gewährleisten.

Das Verbinden des Teilprofils 2.3 mit den anderen Teilprofilen 2.1, 2.2 erfolgt dann wieder in vollkommen identischer Art und Weise wie bei dem anhand der Figuren 1 bis 3 erläuterten Ausführungsbeispiel, auf deren Beschreibung diesbezüglich verwiesen wird.

Ebenso wie die Teilprofile 2.1, 2.2, 2.3 können natürlich auch die weiter oben erwähnten und beschriebenen flächigen Elemente 22, 22', z. B. Holz- oder Kunststoffplatten, mit die ersten Steckverbindungselemente 3 bildenden Laschen oder Zungen 30 in Form von separaten, zweckmäßig metallischen, Bauteilen ausgestattet werden.

Das vorstehend beschriebene Profilsystem lässt sich bei entsprechender Dimensionierung und Formgebung seiner Einzelteile auch für andere als die vorgenannten Zwecke einsetzen, beispielsweise auch für die Fertigung von Möbelstücken.

### Bezugszeichenliste:

| Zeichen | Bezeichnung |
|---|---|
| 1 | Verbundprofil |
| 10 | Ausnehmungen in 1 |
| 11 | Durchbrechungen in 1 |
| 2.1 - 2.n | Teilprofile |
| 20.1 - 20.n | Flächen von 2.1 - 2.n |
| 21 | Aufnahmen |
| 22, 22' | flächige Elemente |
| 23 | Verbindungsflansche oder -laschen |
| 23' | Öffnungen oder Bohrungen in 23 |
| 24 | Scharnierelemente |
| 25 | Riegelelemente |
| 26 | Verriegelungsstangen |
| 3 | erste Steckverbindungselemente |
| 30 | Lasche |
| 31 | Anlagebereich |
| 32 | Grundplatte |
| 33 | Nieten |
| 34 | Schrauben |
| 4 | zweite Steckverbindungselemente |
| 40 | Durchbrechung |
| 41 | Rand von 40 |
| 5 | Klebstofflage |
| 61 | Auflegerichtung |
| 62 | Verschieberichtung |
| 7 | Rückschubsperre |
| 70 | Sperrkieme |
| 8 | Stoßstellen |
| 80 | Überbrückungs-Teilprofil |
| 9 | Profilkreuzungsstellen |
| 90 | Ausnehmungen an 9 |
| 91 | Übergangswinkel |
| 100 | Verbundbauteil |
| h | Profilhöhe |

## Patentansprüche

1. Verfahren zum Herstellen eines Verbundprofils (1), wobei zwei oder mehr Teilprofile (2.1 - 2.n) mittels Verklebens an aneinander anliegenden Flächen der Teilprofile (2.1 - 2.n) miteinander zu dem Verbundprofil (1) verbunden werden, wobei
- jeweils zwei oder mehr Teilprofile (2.1 - 2.n) zusätzlich mittels wenigstens zweier zusammenwirkender Steckverbindungselemente (3, 4) an aneinander anliegenden Flächen (20.1 - 20.n) der Teilprofile (2.1 - 2.n) miteinander verbunden werden,
- dazu wenigstens ein erstes Steckverbindungselement (3) als aus der Fläche (20.1 - 20.n) des einen Teilprofils (2.1 - 2.n) herausgeformte oder als mit der Fläche (20.1 - 20.n) des einen Teilprofils (2.1 - 2.n) verbundene Lasche oder Zunge (30) und wenigstens ein zweites Steckverbindungselement (4) als in der Fläche (20.1 - 20.n) des anderen Teilprofils (2.1 - 2.n) angebrachte Durchbrechung (40) hergestellt wird,
- die Teilprofile (2.1 - 2.n) in einer Lage relativ zueinander aufeinandergelegt werden, in welcher die Lasche oder Zunge (30) des einen Teilprofils (2.1 - 2.n) in der Durchbrechung (40) des anderen Teilprofils (2.1 - 2.n) aufgenommen wird, und
- die beiden Teilprofile (2.1 - 2.n) relativ zueinander in einer in Laschen- oder Zungenrichtung weisenden Verschieberichtung (62) in der Ebene der aneinander anliegenden, ein- oder beidseitig mit einem Klebstoff versehenen Flächen (20.1 - 20.n) verschoben werden und so die Lasche oder Zunge (30) des einen Teilprofils (2.1 - 2.n) über einen Rand (41) der Durchbrechung (40) des anderen Teilprofils (2.1 - 2.n) in Halteeingriff mit dem die Durchbrechung (40) aufweisenden Teilprofil (2.1 - 2.n) gebracht wird und dadurch die Teilprofile (2.1 - 2.n) für ein Aushärten des Klebstoffs gegeneinander lagegerecht fixiert werden, wobei einzelnen oder allen Paaren von erstem und zweitem Steckverbindungselement (3, 4) je eine Rückschubsperre (7) zugeordnet wird, und die/jede Rückschubsperre (7) als jeweils der Lasche oder Zunge (30) benachbarte, mit der zugehörigen Durchbrechung zusammenwirkende Sperrkieme (70) geformt, vorzugsweise gestanzt, wird,
**dadurch gekennzeichnet,**
**dass** die Sperrkieme (70) derart geformt wird, dass sie aus der Fläche des zweiten Teilprofils (2.2) schräg nach oben in eine zu der Verschieberichtung (62) entgegengesetzten Richtung weist.

2. Verfahren nach Anspruch 1, **dadurch gekennzeichnet, dass** zwei oder mehr Teilprofile (2.1 - 2.n) jeweils mittels wenigstens zweier Paare von Lasche oder Zunge (30) und Durchbrechung (40) miteinander verbunden werden.

3. Verfahren nach Anspruch 1 oder 2, **dadurch gekennzeichnet, dass** zum Verkleben der Teilprofile (2.1 - 2.n) miteinander eine Klebstofflage (5) vor dem Verbinden der Teilprofile (2.1 - 2.n) miteinander auf wenigstens eine der im verbundenen Zustand aneinander anliegenden Flächen (20.1 - 20.n) der Teilprofile (2.1 - 2.n) voll- oder teilflächig aufgetragen wird.

4. Verfahren nach einem der Ansprüche 1 bis 3, **dadurch gekennzeichnet, dass** die/jede Lasche oder Zunge (30) als Federklammer geformt, vorzugsweise gestanzt, wird.

5. Verfahren nach einem der Ansprüche 1 bis 4, **dadurch gekennzeichnet, dass** abgewinkelte Teilprofile (2.1 - 2.n), insbesondere in Form von Winkelprofilen und/oder U-Profilen und/oder C-Profilen und/oder Z-Profilen oder Treppenprofilen, ohne Kombination oder in Kombination mit einem oder mehreren flachen Teilprofilen (2.1 - 2.n), zu einem offenen räumlichen Verbundprofil oder zu einem umfangsseitig geschlossenen Hohl-Verbundprofil miteinander verbunden werden.

6. Profilsystem zum Herstellen eines Verbundprofils (1) durch Verbinden von zwei oder mehr Teilprofilen (2.1 - 2.n) miteinander zu dem Verbundprofil (1) mittels Verklebung, wobei
- die Teilprofile (2.1 - 2.n) zusammenwirkende Steckverbindungselemente (3, 4) an aneinander anlegbaren Flächen (20.1 - 20.n) der miteinander zu verbindenden Teilprofile (2.1 - 2.n) aufweisen,
- jeweils ein erstes Steckverbindungselement (3) als aus der Fläche (20.1 - 20.2) des einen Teilprofils (2.1 - 2.n) herausgeformte oder als mit der Fläche (20.1 - 20.n) des einen Teilprofils (2.1 - 2.n) verbundene Lasche oder Zunge (30) und jeweils ein zweites Steckverbindungselement (4) als in der Fläche (20.1 - 20.n) des anderen Teilprofils (2.1 - 2.n) angebrachte Durchbrechung (40) ausgebildet ist,
- die Teilprofile (2.1 - 2.n) in einer Lage relativ zueinander aufeinanderlegbar sind, in welcher die Lasche oder Zunge (30) des einen Teilprofils (2.1 - 2.n) in der Durchbrechung (40) des anderen Teilprofils (2.1 - 2.n) aufgenommen ist, und
- die Teilprofile (2.1 - 2.n) relativ zueinander in einer in Laschen- oder Zungenrichtung weisenden Verschieberichtung (62) in der Ebene ihrer aneinander anliegenden, ein- oder beidseitig mit einem Klebstoff versehenen Flächen (20.1 - 20.n) verschiebbar sind und so die Lasche oder Zunge (30) des einen Teilprofils (2.1 - 2.n) über einen Rand (41) der Durchbrechung (40) des anderen Teilprofils (2.1 - 2.n) in Halteeingriff mit dem die Durchbrechung (40) aufweisenden Teilprofil (2.1 - 2.n) bringbar ist und dadurch die Teilprofile (2.1 - 2.n) für ein Aushärten des Klebstoffs gegeneinander lagegerecht fixierbar sind,
- einzelnen oder allen Paaren von erstem und zweitem Steckverbindungselement (3, 4) je eine Rückschubsperre (7) zugeordnet ist,
- die/jede Rückschubsperre (7) als jeweils der Lasche oder Zunge (30) benachbarte, mit der zugehörigen Durchbrechung zusammenwirkende Sperrkieme (70) geformt, vorzugsweise gestanzt, ist, **dadurch gekennzeichnet,**
**dass** die Sperrkieme (70) derart geformt ist, dass sie aus der Fläche des zweiten Teilprofils (2.2) schräg nach oben in eine zu der Verschieberichtung (62) entgegengesetzten Richtung weist.

7. Profilsystem nach Anspruch 6, **dadurch gekennzeichnet, dass** jedes Teilprofil (2.1 - 2.n) zwei oder mehr Laschen oder Zungen (30) und/oder Durchbrechungen (40) aufweist.

8. Profilsystem nach Anspruch 6 oder 7, **dadurch gekennzeichnet, dass** die Teilprofile (2.1 - 2.n) mittels einer vor dem Verbinden der Teilprofile (2.1 - 2.n) miteinander zu dem Verbundprofil (1) auf wenigstens eine der im verbundenen Zustand aneinander anliegenden Flächen (20.1 - 20.n) der Teilprofile (2.1 - 2.n) voll- oder teilflächig aufgetragenen Klebstofflage (5) miteinander verklebbar sind.

9. Profilsystem nach einem der Ansprüche 6 bis 8, **dadurch gekennzeichnet, dass** die/jede Lasche oder Zunge (30) als Federklammer geformt, vorzugsweise gestanzt, ist.

10. Profilsystem nach einem der Ansprüche 6 bis 9, **dadurch gekennzeichnet, dass** abgewinkelte Teilprofile (2.1 - 2.n), insbesondere in Form von Winkelprofilen und/oder U-Profilen und/oder C-Profilen und/oder Z-Profilen, ohne Kombination oder in Kombination mit einem oder mehreren flachen Teilprofilen (2.1 - 2.n), zu einem umfangsseitig geschlossenen Hohlprofil miteinander verbindbar oder verbunden sind.

11. Profilsystem nach einem der Ansprüche 6 bis 10, **dadurch gekennzeichnet, dass** das Verbundprofil (1) eine über seine Länge gesehen sich verändernden Profilhöhe (h), insbesondere mit nicht zueinander parallel verlaufenden Biegekanten wenigstens eines im Querschnitt gesehen abgewinkelten Teilprofils (2.1 - 2.n) des Verbundprofils (1), aufweist.

12. Profilsystem nach einem der Ansprüche 6 bis 11, **dadurch gekennzeichnet, dass** es zusätzlich flächige Elemente (22, 22'), insbesondere Blech- oder Kunststoffplatten, mit passend zu den Steckverbindungselementen (3, 4) an den Verbundprofilen (1) angeordneten Steckverbindungselementen (3, 4) umfasst.

13. Profilsystem nach einem der Ansprüche 6 bis 12, **dadurch gekennzeichnet, dass** seine Teile standardisiert sind und in einem vorgegebenen, gleichen Raster mit Steckverbindungselementen (3, 4) ausgestattet sind.

14. Verbundbauteil (100), **dadurch gekennzeichnet, dass** es aus einem oder mehreren Verbundprofilen (1) des Profilsystems nach einem der Ansprüche 6 bis 11 und 13 und aus einem oder mehreren flächigen Elementen (22, 22') nach Anspruch 12 gebildet ist.

15. Verbundbauteil (100) nach Anspruch 14, **dadurch gekennzeichnet, dass** es ein Nutzfahrzeugaufbau oder Transportbehälter oder Gebäude oder Möbelstück ist und dass dessen tragende Struktur(en) aus Verbundprofilen (1) des Profilsystems nach einem der Ansprüche 8 bis 16 gebildet ist/sind.

16. Verbundbauteil (100) nach Anspruch 14 oder 15, **dadurch gekennzeichnet, dass** die Verbundprofile (1) Verbindungselemente und/oder Aufnahmen (21) für flächige Elemente (22, 22'), insbesondere Boden- und/oder Wand- und/ oder Decken- und/oder Türplatten, aufweisen.

17. Verbundbauteil (100) nach einem der Ansprüche 14 bis 16, **dadurch gekennzeichnet, dass** die darin verbauten Verbundprofile (1) außenseitige und/oder innenseitige Klebstoffträgerflächen zum Ankleben von flächigen Elementen (22, 22'), insbesondere Boden- und/oder Wand- und/oder Decken- und/oder Türplatten, aufweisen.

## Claims

1. A method for producing a composite profile (1), wherein two or more partial profiles (2.1 - 2.n) are connected with each other by adhesive bonding on surfaces of the partial profiles (2.1 - 2.n) abutting each another to form the composite profile (1); wherein
- two or more partial profiles (2.1 - 2.n) are each additionally connected with each other on surfaces (20.1 - 20.n) of the partial profiles (2.1 - 2.n) abutting each another by at least two interacting plug connection elements (3, 4);
- for this purpose at least one first plug connection element (3) is produced as a tab or tongue (30) that is formed out of the surface (20.1 - 20.n) of the one partial profile (2.1 - 2.n) or that is connected with the surface (20.1 - 20.n) of the one partial profile (2.1 - 2.n) and at least one second plug connection element (4) is produced as an opening (40) attached in the surface (20.1 - 20.n) of the other partial profile (2.1 - 2.n);
- the partial profiles (2.1 - 2.n) are placed on top of each other in a position relative to each other, in which the tab or tongue (30) of the one partial profile (2.1 - 2.n) is received in the opening (40) of the other partial profile (2.1 - 2.n); and
- the two partial profiles (2.1 - 2.n) are displaced relative to each other in a displacement direction (62) facing in tab or tongue direction in the plane of the surfaces (20.1 - 20.n) abutting each other, provided with an adhesive on one or both sides, and thus the tab or tongue (30) of the one partial profile (2.1 - 2.n) is across an edge (41) of the opening (40) of the other partial profile (2.1 - 2.n) brought into holding engagement with the partial profile (2.1 - 2.n) including the opening (40) and thereby the partial profiles (2.1 - 2.n) are fixed in the correct position against each other for a hardening of the adhesive, wherein individual or all pairs of first and second plug connection elements (3, 4) are each assigned with a push-back lock (7), and said/each push-back lock (7) is shaped, preferably punched, as a locking gill (70) that is each adjacent to the tab or tongue (30) and interacting with the associated opening,
**characterized in that**
the locking gill (70) is shaped such that it is facing obliquely upwards in a direction opposite the displacement direction (62) from the surface of the second partial profile (2.2).

2. The method according to claim 1, **characterized in that** two or more partial profiles (2.1 - 2.n) are each connected with each other by at least two pairs of tab or tongue (30) and opening (40).

3. The method according to claim 1 or 2, **characterized in that** for adhesive bonding the partial profiles (2.1 - 2.n) to each other, before connecting the partial profiles (2.1 - 2.n) with each other, an adhesive layer (5) is completely or partially applied on at least one of the surfaces (20.1 - 20.n) of the partial profiles abutting each other in connected state (2.1 - 2.n).

4. The method according to one of claims 1 to 3, **characterized in that** said/each tab or tongue (30) is shaped, preferably punched, as a spring clamp.

5. The method according to one of claims 1 to 4, **characterized in that** angled partial profiles (2.1 - 2-n), especially in the form of angle profiles and/or U-profiles and/or C-profiles and/or Z-profiles or stair tread profiles, without combination or in combination with one or more flat partial profiles (2.1 - 2.n), are connected to an open spatial composite profile or to a circumferentially closed hollow composite profile.

6. A profile system for producing a composite profile (1) by connecting two or more partial profiles (2.1 - 2.n) with each other to the composite profile (1) by adhesive bonding, wherein
- the partial profiles (2.1 - 2.n) include interacting plug connection elements (3, 4) on surfaces (20.1 - 20.n) of the partial profiles (2.1 - 2.n) to be connected with each other, abuttable on each other,
- at least one first plug connection element (3) is each produced as a tab or tongue (30) that is shaped out of the surface (20.1 - 20.2) of the one partial profile (2.1 - 2.n) or that is connected with the surface (20.1 - 20.n) of the one partial profile (2.1 - 2.n) and one second plug connection element (4) is each formed as an opening (40) attached in the surface (20.1 - 20.n) of the other partial profile (2.1 - 2.n);
- the partial profiles (2.1 - 2.n) are placeable on top of each other in a position relative to each other, in which the tab or tongue (30) of the one partial profile (2.1 - 2.n) is received in the opening (40) of the other partial profile (2.1 - 2.n); and
- the partial profiles (2.1 - 2.n) are displaceable relative to each other in a displacement direction (62) facing in tab or tongue direction in the plane of their surfaces (20.1 - 20.n) abutting each other, provided with an adhesive on one or both sides and thus the tab or tongue (30) of the one partial profile (2.1 - 2.n) can across an edge (41) of the opening (40) of the other partial profile (2.1 - 2.n) be brought into holding engagement with the partial profile (2.1 - 2.n) including the opening (40) and thereby the partial profiles (2.1 - 2.n) can be fixed in the correct position against each other for a hardening of the adhesive,
- individual or all pairs of the first and second plug connection element (3, 4) are each assigned with a push-back lock (7),
- said/each push-back lock (7) is shaped, preferably punched, as a locking gill (70) that is each adjacent to the tab or tongue (30) and interacting with the associated opening, **characterized in**
**that** the locking gill (70) is shaped such that it is facing obliquely upwards in a direction opposite the displacement direction (62) from a surface of the second partial profile (2.2).

7. The profile system according to claim 6, **characterized in that** each partial profile (2.1 - 2.n) includes two or more tabs or tongues (30) and/or openings (40).

8. The profile system according to claim 6 or 7, **characterized in that** the partial profiles (2.1 - 2.n) are bondable to each other by an adhesive layer (5) that, before connecting the partial profiles (2.1 - 2.n) with each other, is completely or partially applied on at least one of the surfaces (20.1 - 20.n) of the partial profiles (2.1 - 2.n) abutting each other in connected state.

9. The profile system according to one of claims 6 to 8, **characterized in that** said/each tab or tongue (30) is shaped, preferably punched, as a spring clamp.

10. The profile system according to one of claims 6 to 9, **characterized in that** angled partial profiles (2.1 - 2-n), especially in the form of angle profiles and/or U-profiles and/or C-profiles and/or Z-profiles or stair tread profiles, without combination or in combination with one or more flat partial profiles (2.1 - 2.n), are connected to an open spatial composite profile or to a circumferentially closed hollow composite profile.

11. The profile system according to one of claims 6 to 10, **characterized in that** the composite profile (1) includes a, seen along its length, changing profile height (h), especially with bending edges not parallel to each other of at least one, seen in cross-section, angled partial profile (2.1 - 2.n) of the composite profile (1).

12. The profile system according to one of claims 6 to 11, **characterized in that** it additionally comprises planar elements (22, 22'), especially sheet metal plates and plastic plates, having plug connection elements (3, 4) matching the plug connection elements (3, 4) arranged on the composite profiles (1) .

13. The profile system according to one of claims 6 to 12, **characterized in that** its parts are standardized and are equipped in a given same grid with plug connection elements (3, 4).

14. A composite component (100), **characterized in that** it is formed out of one or more composite profiles (1) of the profile system according to one of the claims 6 to 11 and 13 and of one or more planar elements (22, 22') according to claim 12.

15. The composite component (100) according to claim 14, **characterized in that** it is a utility vehicle superstructure or transportation container or building or piece of furniture and that its support structure(s) is/are formed of composite profiles (1) of the profile system according to one of claims 8 to 16.

16. The composite component (100) according to claim 14 or 15, **characterized in that** the composite profiles (1) include connection elements and/or receptacles (21) for planar elements (22, 22'), especially bottom and/or wall and/or ceiling and/or door plates.

17. The composite component (100) according to one of claims 14 to 16, **characterized in that** the composite profiles (1) built therein include external and/or internal adhesive carrier surfaces for bonding of planar elements (22, 22'), especially bottom and/or wall and/or ceiling and/or door plates.

## Revendications

1. Procédé de fabrication d'un profilé composite (1), dans lequel deux ou plusieurs profilés partiels (2.1 - 2.n) sont reliés entre eux par collage sur des surfaces adjacentes desdits profilés partiels (2.1 - 2.n) pour former le profilé composite (1),
- deux ou plusieurs profilés partiels (2.1 - 2.n) étant en outre respectivement reliés entre eux au moyen d'au moins deux éléments de connexion enfichables (3, 4) coopérant sur des surfaces adjacentes (20.1 - 20.n) desdits profilés partiels (2.1 - 2.n),
- à cet effet au moins un premier élément de connexion enfichable (3) étant fabriqué sous forme d'une patte ou languette (30) formée à partir de la surface (20.1 - 20.n) de l'un des profilés partiels (2.1 - 2.n) ou reliée à la surface (20.1 - 20.n) dudit un profilé partiel (2.1 - 2.n) et au moins un deuxième élément de connexion enfichable (4) étant fabriqué sous forme d'un ajour (40) aménagé dans la surface (20.1 - 20.n) de l'autre profilé partiel (2.1 - 2.n),
- les profilés partiels (2.1 - 2.n) étant posés l'un sur l'autre dans une position l'un par rapport à l'autre dans laquelle la patte ou languette (30) dudit un profilé partiel (2.1 - 2.n) est logée dans l'ajour (40) de l'autre profilé partiel (2.1 - 2.n), et
- les deux profilés partiels (2.1 - 2.n) étant déplacés l'un par rapport à l'autre dans un sens de déplacement (62) orienté en direction de la patte ou languette, dans le plan des surfaces (20.1 - 20.n) appliquées l'une contre l'autre et pourvues d'un adhésif sur une ou deux faces, et la patte ou languette (30) de l'un des profilés partiels (2.1 - 2.n) étant amenée en prise de maintien avec le profilé partiel (2.1 - 2.n) présentant l'ajour (40) par l'intermédiaire d'un bord (41) de l'ajour (40) de l'autre profilé partiel (2.1 - 2.n), et les profilés partiels (2.1 - 2.n) étant ainsi fixés l'un contre l'autre en position correcte pour un durcissement de la colle, un blocage de recul (7) étant associé à chaque paire ou à toutes les paires du premier et du deuxième élément de connexion enfichable (3, 4), et ledit/chaque blocage de recul (7) étant formé, de préférence estampé, sous la forme d'un cran de blocage (70) respectivement voisin de la patte ou languette (30) et coopérant avec l'ajour correspondant, **caractérisé en ce**
**que** le cran de blocage (70) est formé de sorte qu'il est orienté obliquement vers le haut à partir de la surface du deuxième profilé partiel (2.2) dans une direction opposée au sens de déplacement (62).

2. Procédé selon la revendication 1, **caractérisé en ce que** deux ou plusieurs profilés partiels (2.1 - 2.n) sont reliés l'un à l'autre chacun au moyen d'au moins deux paires de patte ou languette (30) et ajour (40).

3. Procédé selon la revendication 1 ou 2, **caractérisé en ce que**, pour coller les profilés partiels (2.1 - 2.n) entre eux, une couche de colle (5) est appliquée, avant de relier les profilés partiels (2.1 - 2.n) entre eux, sur toute ou partie de la surface d'au moins l'une des surfaces (20.1 - 20.n) des profilés partiels (2.1 - 2.n) adjacentes l'une à l'autre à l'état relié.

4. Procédé selon l'une quelconque des revendications 1 à 3, **caractérisé en ce que** la/chaque patte ou languette (30) est formée, de préférence estampée sous forme de pince à ressort.

5. Procédé selon l'une quelconque des revendications 1 à 4, **caractérisé en ce que** des profilés partiels coudés (2.1. - 2.n), notamment sous forme de cornières et/ou de profilés en U et/ou de profilés en C et/ou de profilés en Z ou de profilés d'escalier sont reliés entre eux sans combinaison ou en combinaison avec un ou plusieurs profilés partiels plats (2.1 - 2.n) pour former un profilé composite spatial ouvert ou un profilé composite creux fermé sur sa périphérie.

6. Système de profilés pour la fabrication d'un profilé composite (1) par assemblage de deux ou plusieurs profilés partiels (2.1 - 2.n) entre eux pour former le profilé composite (1) par collage,
- les profilés partiels (2.1 - 2.n) présentant des éléments de connexion enfichable coopérant (3. 4) sur des surfaces (20.1 - 20.n) des profilés partiels (2.1 - 2.n) à relier entre eux, lesquelles surfaces peuvent être appliquées les unes contre les autres,
- au moins un premier élément de connexion enfichable (3) étant conçu sous forme d'une patte ou languette (30) formée à partir de la surface (20.1 - 20.2) de l'un des profilés partiels (2.1 - 2.n) ou reliée à la surface (20.1 - 20.n) dudit un profilé partiel (2.1 - 2.n) et au moins un deuxième élément de connexion enfichable (4) étant fabriqué sous forme d'un ajour (40) aménagé dans la surface (20.1 - 20.n) de l'autre profilé partiel (2.1 - 2.n),
- les profilés partiels (2.1 - 2.n) pouvant être posés l'un sur l'autre dans une position par rapport l'un à l'autre dans laquelle la patte ou languette (30) dudit un profilé partiel (2.1 - 2.n) est logée dans l'ajour (40) de l'autre profilé partiel (2.1 - 2.n), et
- les profilés partiels (2.1 - 2.n) pouvant être déplacés l'un par rapport à l'autre dans un sens de déplacement (62) orienté dans le sens de la patte ou languette, dans le plan de leurs surfaces (20.1 - 20.n) appliquées l'une contre l'autre et pourvues d'une colle sur une ou deux faces, et la patte ou languette (30) de l'un des profilés partiels (2.1 - 2.n) pouvant être amenée en prise de maintien avec le profilé partiel (2.1 - 2.n) présentant l'ajour (40) par l'intermédiaire d'un bord (41) de l'ajour (40) de l'autre profilé partiel (2.1 - 2.n), et les profilés partiels (2.1 - 2.n) étant ainsi fixés l'un contre l'autre en position correcte pour un durcissement de la colle,
- un blocage de recul (7) étant associé à chaque paire ou à toutes les paires du premier et du deuxième élément de connexion enfichable (3, 4),
- le/chaque blocage de recul (7) étant formé, de préférence estampé, sous forme de cran de blocage (70) respectivement voisin de la patte ou languette (30) et coopérant avec l'ajour correspondant, **caractérisé en ce que** le cran de blocage (70) est formé de sorte qu'il est orienté obliquement vers le haut à partir de la surface du deuxième profilé partiel (2.2) dans une direction opposée au sens de déplacement (62).

7. Système de profilés selon la revendication 6, **caractérisé en ce que** chaque profilé partiel (2.1 - 2.n) présente deux ou plusieurs pattes ou languettes (30) et/ou ajours (40).

8. Système de profilés selon la revendication 6 ou 7, **caractérisé en ce que** les profilés partiels (2.1 - 2.n) peuvent être collés l'un à l'autre à l'aide d'une couche de colle (5) appliquée, avant de relier les profilés partiels (2.1 - 2.n) entre eux pour former le profilé composite (1), sur toute ou partie de la surface d'au moins une des surfaces (20.1 - 20.n) des profilés partiels (2.1 - 2.n) adjacentes l'une à l'autre à l'état relié.

9. Système de profilés selon l'une quelconque des revendications 6 à 8, **caractérisé en ce que** la/chaque patte ou languette (30) est formée, de préférence estampée sous forme de pince à ressort.

10. Système de profilés selon l'une quelconque des revendications 6 à 9, **caractérisé en ce que** des profilés partiels coudés (2.1. - 2.n), notamment sous forme de cornières et/ou de profilés en U et/ou de profilés en C et/ou de profilés en Z peuvent être ou sont reliés entre eux sans combinaison ou en combinaison avec un ou plusieurs profilés partiels plats (2.1 - 2.n) pour former un profilé composite creux fermé sur sa périphérie.

11. Système de profilés selon l'une quelconque des revendications 6 à 10, **caractérisé en ce que** le profilé composite (1) présente une hauteur de profilé (h) qui, vue sur sa longueur, varie, notamment avec des arêtes de pliage non parallèles entre elles d'au moins un profilé partiel (2.1 - 2.n) du profilé composite (1) qui, vu en coupe transversale, est coudé.

12. Système de profilés selon l'une quelconque des revendications 6 à 11, **caractérisé en ce qu'**il comprend en outre des éléments plats (22, 22'), notamment des plaques de tôle ou de matière plastique, avec des éléments de connexion enfichables (3, 4) agencés sur les profilés composites (1) de manière adaptée aux éléments de connexion enfichables (3, 4).

13. Système de profilés selon l'une quelconque des revendications 6 à 12, **caractérisé en ce que** ses pièces sont standardisées et équipées d'éléments de connexion enfichables (3, 4) selon une trame prédéterminée et identique.

14. Élément de construction composite (100), **caractérisé en ce qu'**il est formé d'un ou de plusieurs profilés composites (1) du système de profilés selon l'une quelconque des revendications 6 à 11 et 13, et d'un ou plusieurs éléments plats (22, 22') selon la revendication 12.

15. Élément de construction composite (100) selon la revendication 14, **caractérisé en ce qu'**il s'agit d'une carrosserie de véhicule utilitaire ou d'un conteneur de transport ou d'un bâtiment ou d'un meuble, et **en ce que** sa ou ses structures porteuses sont formées de profilés composites (1) du système de profilés selon l'une quelconque des revendications 8 à 16.

16. Élément de construction composite (100) selon la revendication 14 ou 15, **caractérisé en ce que** les profilés composites (1) présentent des éléments de connexion et/ou des logements (21) pour des éléments plats (22, 22'), notamment des panneaux de fond et/ou de paroi et/ou de plafond et/ou de porte.

17. Élément de construction composite (100) selon l'une quelconque des revendications 14 à 16, **caractérisé en ce que** les profilés composites (1) qui y sont incorporés présentent des surfaces de support de colle côté extérieur et/ou côté intérieur pour le collage d'éléments plats (22, 22'), notamment de panneaux de fond et/ou de paroi et/ou de plafond et/ou de porte.
